# EUROPÄISCHE PATENTSCHRIFT

(11) **EP 4 082 790 B1**
(45) Veröffentlichungstag und Bekanntmachung des Hinweises auf die Patenterteilung: **16.07.2025**
(21) Anmeldenummer: 22170071.9
(22) Anmeldetag: 26.04.2022
(51) Int. Cl.: B33Y 50/00, G06T 17/20, B22F 10/80, B29C 65/48, B29C 65/00

(54) **VERFAHREN ZUM ZELLKONFORMEN TEILEN EINER GITTERSTRUKTUR**
METHOD FOR CELL-COMPLIANT SPLITTING OF A GRID STRUCTURE
PROCÉDÉ DE DIVISION CELLULAIRE CONFORME D'UNE STRUCTURE RÉTICULAIRE

(30) Priorität: 26.04.2021 DE 102021110650
(43) Veröffentlichungstag der Anmeldung: 02.11.2022
(73) Patentinhaber: Oechsler AG, 91522 Ansbach (DE)
(72) Erfinder: Swierkot, Adrian, 91522 Ansbach (DE); Sturm, Joachim, 91623 Sachsen bei Ansbach (DE); Christ, Markus, 90402 Nuernberg (DE)
(74) Vertreter: Canzler & Bergmeier Patentanwälte Partnerschaft mbB

(56) Entgegenhaltungen:
- WO-A1-2021/073719
- US-A1- 2014 052 415
- YOSEP OH ET AL: "Part decomposition and assembly-based (Re) design for additive manufacturing: A review", ADDITIVE MANUFACTURING, vol. 22, August 2018 (2018-08-01), NL, pages 230 - 242, XP055645411, ISSN: 2214-8604, DOI: 10.1016/j.addma.2018.04.018
- J. VANEK ET AL: "PackMerger: A 3D Print Volume Optimizer", COMPUTER GRAPHICS FORUM : JOURNAL OF THE EUROPEAN ASSOCIATION FOR COMPUTER GRAPHICS, vol. 33, no. 6, 26 May 2014 (2014-05-26), Oxford, pages 322 - 332, XP055639213, ISSN: 0167-7055, DOI: 10.1111/cgf.12353
- LINJIE LUO ET AL: "Chopper : partitioning models into 3D-printable parts", ACM TRANSACTIONS ON GRAPHICS, vol. 31, no. 6, November 2012 (2012-11-01), US, pages 1, XP055538879, ISSN: 0730-0301, DOI: 10.1145/2366145.2366148

## Beschreibung

Die vorliegende Erfindung betrifft ein Verfahren, insbesondere ein computerimplementiertes Verfahren, zum Teilen eines virtuellen dreidimensionalen Gesamtmodells eines Körpers in zumindest zwei virtuelle Teilmodelle. Vorrichtungen und Verfahren zum Herstellen eines dreidimensionalen Objekts sind im Stand der Technik vielfach bekannt. Beispielsweise ist aus der WO 2006/122645 A eine Vorrichtung und ein Verfahren zum Herstellen eines dreidimensionalen Objekts durch Verfestigen von Schichten eines pulverförmigen Materials bekannt. Die Schichten werden mittels eines Beschichters auf der Oberfläche eines Baufelds aufgetragen.

Derartige Verfahren haben im Allgemeinen den Nachteil, dass das Baufeld begrenzt ist und somit nur Körper mit einer begrenzten Größe hergestellt werden können. Um diesen Nachteil zu umgehen, ist es bekannt, größere Körper in kleinere Teilkörper zu unterteilen, die einzeln gedruckt und später zusammengefügt werden. Durch das Teilen können Gitterstrukturen (Lattice) geschwächt werden. Dies kann sich nachteilig auf die mechanischen Eigenschaften des zu druckenden Körpers auswirken. Ferner können beim nachträglichen Fügen Ungenauigkeiten in den Teilkörpern entstehen, so dass diese nicht optimal zusammengefügt werden können. Zudem ist das Zusammenfügen meist zeit- und/oder kostenintensiv. Ein Verfahren zum Teilen eines Modells in mehrere Teilmodelle ist aus der Veröffentlichung US 2014/0052415 A1 bekannt.

Aufgabe der vorliegenden Erfindung ist es, die aus dem Stand der Technik bekannten Nachteile zu beseitigen.

Die der Erfindung zugrundeliegende Aufgabe wird durch die Merkmale der unabhängigen Patentansprüche gelöst. Weitere vorteilhafte Ausgestaltungen ergeben sich aus den Unteransprüchen und den Zeichnungen.

Vorgeschlagen wird ein Verfahren, insbesondere ein computerimplementiertes Verfahren, zum Teilen eines virtuellen dreidimensionalen Gesamtmodells eines Körpers in zumindest zwei virtuelle Teilmodelle. Bei dem Verfahren wird eine virtuelle dreidimensionale Trennfläche für das Gesamtmodell des Körpers erstellt, die eine dreidimensionale zellkonforme Form aufweist. Unter dem Begriff "zellkonform" ist eine der Geometrie, Form, Außenfläche und/oder Kontur von Einheitszellen folgende Form zu verstehen. Bei dem Verfahren wird das Gesamtmodell des Körpers mit einer aus einer Vielzahl von Zellen ausgebildeten Gitterstruktur erstellt. Hierbei werden vorzugsweise die Einheitszellen durch die Gitterstruktur ersetzt. Anschließend wird das Gesamtmodell entlang der zellkonformen Trennfläche in zwei Teilmodelle geteilt. Die Teilung erfolgt derart, dass Gemeinschaftsstreben der Gitterstruktur, die jeweils sowohl Bestandteil zumindest einer Zelle des einen Teilmodells als auch Bestandteil zumindest einer benachbarten Zelle des anderen Teilmodells sind, mittels der zellkonformen Trennfläche derart geteilt werden, dass die korrespondierenden Zellen ganz und/oder geschlossen bleiben. Die Zellen werden demnach nicht aufgebrochen. Stattdessen bleiben alle ihre Streben erhalten. Die Teilmodelle weisen somit jeweils in sich geschlossene Gitterstrukturen auf. Vorteilhafterweise kann hierdurch eine sehr große Stabilität der Teilmodelle sowie des Gesamtmodells erzielt werden. Auch können die Teilmodelle sowie das Gesamtmodell durch diese zellkonforme Teilung sehr leicht ausgebildet werden, da im Fügebereich zwischen den beiden Teilmodellen keine vermehrte Materialansammlung nötig ist. Des Weiteren entstehen zueinander korrespondierende Flächen, so dass die Teilmodelle passgenau zueinander positioniert und miteinander geführt werden können.

Vorteilhaft ist es, wenn die Gemeinschaftsstreben in ihrer jeweiligen Längsrichtung geteilt werden. Hierdurch kann sichergestellt werden, dass die Zellen nicht aufgebrochen werden, sondern stattdessen ganz und/oder geschlossen bleiben. Vorteilhafterweise kann jedoch eine sehr hohe Stabilität erzielt werden.

Auch ist es vorteilhaft, wenn die Gemeinschaftsstreben derart geteilt werden, dass sich die Teile der jeweiligen Gemeinschaftsstrebe jeweils lückenlos und/oder durchgängig zwischen zwei Knotenpunkten der jeweils korrespondierenden Zelle erstrecken. Jedoch bleiben die jeweils benachbarten Zellen ganz und/oder geschlossen.

Ferner ist es vorteilhaft, wenn zumindest eine der Gemeinschaftsstreben derart geteilt wird, dass die jeweiligen Teile zueinander symmetrisch oder asymmetrisch sind.

Vor dem Erstellen der Trennfläche wird ein dreidimensionaler virtueller Grundkörper bereitgestellt. Dieser gibt die geometrischen Abmaße des zu erstellenden Gesamtmodells wieder. Diesbezüglich ist es ferner vorteilhaft, wenn danach zumindest eine den Grundkörper teilende, insbesondere ebene, gekrümmte und/oder geknickte, Schnittfläche festgelegt wird, die den Grundkörper zerteilt. Auch ist es vorteilhaft, wenn insbesondere danach ein Volumen des Grundkörpers mit einer Vielzahl von ganzen Einheitszellen gefüllt wird. Die Einheitszellen umfassen im Wesentlichen eine Oberfläche, Kanten und einen Mittelpunkt.

Vorteilhaft ist es, wenn die dreidimensionale zellkonforme Form der Trennfläche von einem Algorithmus und/oder mittels einer Zelloberfläche zumindest einiger der im Bereich der Schnittfläche befindlichen ganzen Einheitszellen erstellt wird. Infolgedessen wird die Form der Trennfläche im wesentlicher der Oberfläche der zur Schnittfläche benachbarten Einheitszellen nachempfunden.

In einer vorteilhaften Weiterbildung der Erfindung werden zum Erstellen der dreidimensionalen zellkonformen Form der Trennfläche zumindest die im Bereich der Schnittfläche befindlichen ganzen Einheitszellen zu jeweils einer der beiden Seiten der Schnittfläche zugeordnet. Vorteilhafterweise ist somit jeder der beiden Seiten der Schnittfläche eine jeweilige Einheitszellengruppe zugeordnet, die im Bereich der Schnittfläche eine dreidimensionale zellkonforme Stoßfläche aufweisen.

Vorteilhaft ist es, wenn die ganzen Einheitszellen jeweils über ihren Mittelpunkt einer der beiden Seiten der Schnittfläche zugeordnet werden. Demnach werden die ganzen Einheitszellen vorzugsweise jeweils derjenigen Seite der Schnittfläche zugeordnet, auf der sich ihr Mittelpunkt befindet. Besonders vorteilhaft ist es, wenn die Form der Trennfläche korrespondierend und/oder anhand der dreidimensionalen zellkonformen Stoßfläche einer der beiden Einheitszellengruppen erstellt wird, so dass die Trennfläche vorzugsweise eine Form aufweist, die mit der Zelloberfläche der die Stoßfläche bildenden Einheitszellen korrespondiert.

Bei der Erstellung der Gitterstruktur ist es vorteilhaft, wenn die Einheitszellen, insbesondere zur Ausbildung einer Oberflächengitterstruktur, mit einer Außenfläche des Grundkörpers verschnitten werden.

Zum Erstellen der Gitterstruktur des Gesamtmodells werden erfindungsgemäß die Einheitszellen mit Streben ersetzt, die sich entlang der Kanten der Einheitszellen erstrecken. Hierbei stellen die Streben für sich Körper mit einem Volumen dar. Diese Streben können nunmehr zellkonform geteilt werden, so dass die korrespondierenden Zellen ganz und/oder geschlossen bleiben. Alle Streben einer Zelle erstrecken sich somit weiterhin durchgängig und/oder ununterbrochen zwischen den Knotenpunkten der Zelle.

In einer vorteilhaften Weiterbildung der Erfindung weist das Verfahren zumindest einen der folgenden Schritte auf:
- Abgleichen wenigstens eines Außenmaßes des virtuellen dreidimensionalen Gesamtmodells des Körpers mit wenigstens einem korrespondierenden Innenmaß eines begrenzten Fertigungsbereichs einer additiven Fertigungsvorrichtung in zumindest einer Raumrichtung;
- Teilen des Gesamtmodells in die wenigstens zwei virtuellen dreidimensionalen Teilmodelle, wenn das Außenmaß des Gesamtmodells das korrespondierende Innenmaß des Fertigungsbereichs überschreitet;
- Ausbilden zumindest eines Verbindungselements, das die wenigstens zwei Teilmodelle derart beweglich miteinander verbindet, dass diese relativ zueinander aus einer Fertigungsstellung, in welcher korrespondierende Fügeflächen der Teilmodelle voneinander beabstandet sind, in eine Fügestellung, in welcher die korrespondierenden Fügeflächen der Teilmodelle aneinander anliegen, bewegt werden können; und/oder
- Erstellung eines virtuellen dreidimensionalen Fertigungsmodells in der Fertigungsstellung der Teilmodelle. Beim Fertigungsmodell handelt es sich im Wesentlichen um das Gesamtmodell, das in zumindest zwei Teilmodelle geteilt wurde und dessen Teilmodelle über zumindest ein Verbindungselement miteinander verbunden sind und sich zueinander in der Fertigungsstellung befinden.

Vorteilhaft ist es, wenn zumindest einer der vorstehenden Verfahrensschritte von einem Benutzer mit einer Recheneinheit, insbesondere einem darauf abgespeicherten Computerprogramm und/oder einer künstlichen Intelligenz, und/oder von einer derartigen Recheneinheit durchgeführt wird.

Vorgeschlagen wird ferner eine Recheneinheit zum Teilen eines virtuellen dreidimensionalen Gesamtmodells eines Körpers in zumindest zwei virtuelle Teilmodelle, insbesondere mit einem darauf abgespeicherten Computerprogramm und/oder einer künstlichen Intelligenz. Die Recheneinheit ist dazu ausgebildet, zumindest einen Teil der Verfahrensschritte eines Verfahrens gemäß der vorangegangenen Beschreibung auszuführen, wobei die genannten Merkmale einzeln oder in beliebiger Kombination vorhanden sein können.

Auch wird ein Computerprogramm und/oder künstliche Intelligenz vorgeschlagen, das/die bei Ausführung durch eine Recheneinheit diese veranlasst, zumindest einen Teil der Verfahrensschritte eines Verfahrens zum Teilen eines virtuellen dreidimensionalen Gesamtmodells eines Körpers in zumindest zwei virtuelle Teilmodelle gemäß der vorangegangenen Beschreibung auszuführen, wobei die genannten Merkmale einzeln oder in beliebiger Kombination vorhanden sein können.

Vorgeschlagen wird ferner ein computerlesbares Speichermedium mit einem zumindest teilweise darauf abgespeicherten virtuellen dreidimensionalen Gesamtmodell eines Körpers, das in zumindest zwei virtuelle Teilmodelle geteilt ist, das mit einem Verfahren, einer Recheneinheit, einem Computerprogramm und/oder einer künstlichen Intelligenz gemäß der vorangegangenen Beschreibung hergestellt wurde, wobei die genannten Merkmale einzeln oder in beliebiger Kombination vorhanden sein können.

Vorgeschlagen wird ein Herstellungsverfahren zur Herstellung eines Körpers bei dem ein virtuelles dreidimensionales Gesamtmodell des Körpers, das in zumindest zwei virtuelle Teilmodelle geteilt ist, und/oder ein virtuelles dreidimensionales Fertigungsmodell in der Fertigungsstellung der Teilmodelle mit einem Verfahren gemäß der vorangegangenen Beschreibung hergestellt wird, wobei die genannten Merkmale einzeln oder in beliebiger Kombination vorhanden sein können. Anschließend werden Fertigungsdaten für eine additive Fertigungsvorrichtung anhand des geteilten, virtuellen, dreidimensionalen Gesamtmodells und/oder Fertigungsmodells erstellt. Zuletzt wird der Körper mit der additiven Fertigungsvorrichtung anhand der Fertigungsdaten hergestellt. Bei der additiven Fertigungsvorrichtung handelt es sich vorzugsweise um einen 3D-Drucker.

Vorteilhaft ist es, wenn anhand der Teilmodelle Teilkörper gefertigt werden, wobei wenigstens einer der Teilkörper in einem additiven Fertigungsverfahren hergestellt wird, wobei die wenigstens zwei Teilkörper in einer Kammer einer Lösungsmittelatmosphäre ausgesetzt werden, so dass eine Oberfläche der Teilkörper geglättet wird, und dass die wenigstens zwei Teilkörper derart in der Kammer platziert werden, dass sie sich an wenigstens einer Fügefläche berühren und somit an der wenigstens einen Fügefläche durch die Lösungsmittelatmosphäre eine stoffschlüssige Verbindung zwischen den wenigstens zwei Teilkörpern entsteht.

Vorgeschlagen wird ein Körper, der mit einem Herstellungsverfahren gemäß der vorangegangenen Beschreibung hergestellt ist, wobei die genannten Merkmale einzeln oder in beliebiger Kombination vorhanden sein können.

Ferner wird eine Vorrichtung mit einer Recheneinheit zum Erstellen eines virtuellen dreidimensionalen Gesamtmodells eines Körpers, und/oder mit einer additiven Fertigungsvorrichtung zum Herstellen des Körpers vorgeschlagen. Die Recheneinheit ist ausgebildet, zumindest einen Teil der Verfahrensschritte eines Verfahrens zum Erstellen eines virtuellen dreidimensionalen Gesamtmodells des Körpers gemäß der vorangegangenen Beschreibung auszuführen, wobei die genannten Merkmale einzeln oder in beliebiger Kombination vorhanden sein können.

Zusätzlich oder alternativ zu den vorstehenden Vorrichtungen und Verfahren werden nachfolgende Verfahren und Vorrichtungen vorgeschlagen, die mit den vorstehenden Vorrichtungen und/oder Verfahren beliebig kombiniert werden können. Vorgeschlagen wird ein Verfahren, insbesondere computerimplementiertes Verfahren, zum Erstellen eines virtuellen dreidimensionalen Fertigungsmodells eines Körpers. Als virtuelles dreidimensionales Fertigungsmodell ist ein Modell zu verstehen, dass zur Fertigung und/oder Herstellung, insbesondere durch eine Vorrichtung mit einer additiven Fertigungsvorrichtung, des Körpers verwendet wird.

Bei dem Verfahren wird wenigstens ein Außenmaß eines virtuellen dreidimensionalen Gesamtmodells des Körpers mit wenigstens einem korrespondierenden Innenmaß eines begrenzten Fertigungsbereichs einer additiven Fertigungsvorrichtung in zumindest einer Raumrichtung abgeglichen. Bei dem virtuellen dreidimensionalen Gesamtmodell kann es sich beispielsweise um ein CAD-Modell handeln. Das Gesamtmodell stellt dabei das virtuelle Abbild des herzustellenden Körpers dar. Das Gesamtmodell des Körpers kann dabei manuell von einem Benutzer erstellt und/oder automatisiert von einer Recheneinheit ermittelt werden.

Als Fertigungsbereich ist dabei der Bereich zu verstehen, in welchem der Körper anschließend zumindest teilweise gefertigt werden kann. Das jeweilige Innenmaß des Fertigungsbereichs in jeder Raumrichtung begrenzt dabei das maximal fertigbare Außenmaß des Gesamtmodells in dieser Raumrichtung. Vorzugsweise wird dabei jedes der Außenmaße des virtuellen dreidimensionalen Gesamtmodells des Körpers mit jeder der korrespondierenden Innenmaße des begrenzten Fertigungsbereichs der additiven Fertigungsvorrichtung in der jeweiligen Raumrichtungen, also in Längsrichtung, Querrichtung und Hochrichtung, abgeglichen. So kann gewährleistet werden, dass der Körper im begrenzten Fertigungsbereich gefertigt werden kann.

Überschreitet das Außenmaß des Gesamtmodells das korrespondierende Innenmaß des Fertigungsbereichs, wird das Gesamtmodell in wenigstens zwei virtuelle dreidimensionale Teilmodelle geteilt. Diese Teilung kann gemäß einem Verfahren und/oder einer Vorrichtung gemäß der vorangegangenen Beschreibung erfolgen, wobei die genannten Merkmale einzeln oder in beliebiger Kombination vorhanden sein können. Anschließend wird zumindest ein Verbindungselement ausgebildet, das die wenigstens zwei Teilmodelle derart beweglich miteinander verbindet, dass diese relativ zueinander aus einer Fertigungsstellung, in welcher korrespondierende Fügeflächen der Teilmodelle voneinander beabstandet sind, in eine Fügestellung, in welcher die korrespondierenden Fügeflächen der Teilmodelle aneinander anliegen, bewegt werden können.

Als Fertigungsstellung ist dabei die Stellung zu verstehen, in der die wenigstens zwei Teilmodelle mit deren verbindenden Verbindungselement innerhalb des Fertigungsbereichs platziert und mit Hilfe der Fertigungsvorrichtung gefertigt werden können. Die Teilmodelle sind dabei virtuelle dreidimensionale Modelle von Teilen des Körpers. Als Fügestellung ist hingegen die Stellung zu verstehen, in der die wenigstens zwei Teilmodelle derart mittels der Fügeflächen aneinander anliegen, sodass diese zusammen das wenigstens eine Außenmaß des Gesamtmodells bilden. Die Fügeflächen sind dabei die Flächen, die die Verbindung zwischen den wenigstens zwei Teilmodellen in der Fügestellung herstellen.

Danach wird das virtuelle dreidimensionale Fertigungsmodell in der Fertigungsstellung der Teilmodelle erstellt. Das virtuelle dreidimensionale Fertigungsmodell der Teilmodelle kann dabei zur anschließenden additiven Fertigung innerhalb des begrenzten Fertigungsbereichs der additiven Fertigungsvorrichtung verwendet werden. Vorteilhafterweise weist das Fertigungsmodell des Körpers in der Fügestellung das Gesamtmodell und das Verbindungselement auf.

Das Verfahren hat den Vorteil, dass innerhalb des begrenzten Fertigungsbereichs das Gesamtmodell gefertigt werden kann, obwohl dieses mit wenigstens einem der Außenmaße über das korrespondierende Innenmaß des begrenzten Fertigungsbereichs übersteht. Das Gesamtmodell ist also in wenigstens einer der Raumrichtungen zu groß für den Fertigungsbereich. Das Verbindungselement verbindet dabei die wenigstens zwei Teilmodelle, so dass diese in der Fertigungsstellung unabhängig voneinander gedruckt und nach der Fertigung in die Fügestellung bewegt werden können. Somit können dadurch auch den begrenzten Fertigungsbereich überstehende Gesamtmodelle bzw. Körper gefertigt werden.

Durch das zumindest eine Verbindungselement kann zudem gewährleistet werden, dass die Fügeflächen der jeweiligen Teilmodelle in der Fügestellung aneinander anliegen. Die jeweiligen Teilmodelle werden zusammen, insbesondere nacheinander und/oder übereinander, im Fertigungsbereich gefertigt. Mittels des wenigstens einen Verbindungselements sind die Teilmodelle derart miteinander verbunden, dass auch bei Veränderungen der Fertigungsparameter, beispielsweise bei Temperaturschwankungen, diese zueinander korrespondierend bzw. formstabil gefertigt werden können.

Vorteilhaft ist es, wenn das Verbindungselement derart ausgebildet wird, dass es die wenigstens zwei Teilmodelle rotatorisch und/oder translatorisch beweglich, insbesondere relativ zueinander klappbar und/oder verschiebbar, miteinander verbindet, wobei das Verbindungselement vorzugsweise als Verbindungsgelenk, insbesondere Drehgelenk und/oder Schubgelenk, ausgebildet wird. Die wenigstens zwei Teilmodelle können dabei von der Fertigungsstellung in die Fügestellung und/oder umgekehrt geklappt und/oder verschoben werden. Somit schafft das Verbindungsgelenk eine einfache und funktionale Verbindung zwischen den wenigstens zwei Teilmodellen. Das Verbindungselement kann dabei als Gelenk beispielsweise als trennbares und/oder als untrennbares Scharnier ausgebildet sein. Ist das Scharnier trennbar ausgestaltet, so weist jeder der Teilmodelle einen Scharnierabschnitt auf, welche trennbar miteinander verbunden sind. Ist das Scharnier untrennbar ausgebildet, so kann dieses beispielsweise als Filmscharnier als Dünnstelle zwischen den wenigstens zwei Teilmodellen angeordnet sein. Wird das Verbindungselement zusammen mit den Teilmodellen gefertigt, so kann dieses das gleiche und/oder ein anderes Material als die Teilmodelle aufweisen.

Des Weiteren ist es vorteilhaft, wenn zumindest ein Arretierelement ausgebildet wird, mittels dem zwei korrespondierende Teilmodelle zueinander in ihrer Fügestellung arretiert werden können. Durch das wenigstens eine Arretierelement kann somit verhindert werden, dass die wenigstens zwei korrespondierenden Teilmodelle von der Fügestellung zurück in die Fertigungsstellung bewegt werden. Zudem kann mithilfe des Arretierelements und dem damit verbundenen Halten der Teilmodelle in der Fügestellung der wenigstens zwei korrespondierenden Teilmodelle anschließend an die Fertigung das Zusammenfügen von Teilen des Körpers zum Körper erleichtert werden.

Auch ist es vorteilhaft, wenn wenigstens ein Außenmaß zumindest eines der in der Fertigungsstellung befindlichen Teilmodelle und/oder des Fertigungsmodells mit dem wenigstens einen korrespondierenden Innenmaß des begrenzten Fertigungsbereichs in zumindest einer der Raumrichtungen abgeglichen wird. Dadurch kann sichergestellt werden, dass das zumindest eine in der Fertigungsstellung befindliche Teilmodell und/oder das Fertigungsmodell insbesondere ausschließlich innerhalb des abgegrenzten Fertigungsbereichs angeordnet ist und somit fertigbar ist.

Vorteilhafterweise wird anschließend das zumindest eine Teilmodelle in wenigstens zwei Subteilmodelle geteilt, wenn das Außenmaß des abgeglichenen Teilmodells und/oder des Fertigungsmodells das korrespondierende Innenmaß des Fertigungsbereichs überschreitet. Danach kann zumindest ein Verbindungselement und/oder Arretierelement zwischen den wenigstens zwei Subteilmodellen ausgebildet und/oder das virtuelle Fertigungsmodell in der Fertigungsstellung der Teilmodelle und Subteilmodelle erstellt werden. Somit kann im Falle einer Überschreitung des Außenmaßes wenigstens eines der Teilmodelle über das wenigstens eine korrespondierende Innenmaß des begrenzten Fertigungsbereichs weiter geteilt werden. Das zumindest eine an den Subteilmodellen angeordnete Verbindungselement gewährleistet dabei das Bewegen der wenigstens zwei Subteilmodelle von der Fertigungsstellung in die Fügestellung und/oder umgekehrt.

In einer vorteilhaften Weiterbildung wird das Gesamtmodell, das Teilmodell und/oder das Subteilmodell derart geteilt, dass sein Außenmaß das korrespondierende Innenmaß des Fertigungsbereichs unterschreitet. So kann sichergestellt werden, dass das Fertigungsmodell innerhalb des begrenzten Fertigungsbereichs gefertigt werden kann. Zudem kann ein unnötiges weiteres Teilen des Gesamtmodells, des Teilmodells und/oder des Subteilmodells vermieden werden, falls dessen Außenmaß bereits das korrespondierende Innenmaß des Fertigungsbereichs unterschreitet.

Des Weiteren ist es vorteilhaft, wenn das wenigstens eine Außenmaß des virtuellen dreidimensionalen Gesamtmodells des Körpers, des zumindest einen Teilmodells und/oder des Fertigungsmodells in wenigstens einer Raumrichtung erfasst wird. Zudem ist es von Vorteil, wenn das wenigstens eine Innenmaß des abgegrenzten Fertigungsbereichs der additiven Fertigungsvorrichtung in wenigstens einer Raumrichtung eingegeben und/oder ermittelt wird. Wenigstens einer der vorgenannten Schritte des Erfassens des Außenmaßes, der Eingabe und/oder der Ermittlung des Innenmaßes kann dabei manuell von einem Benutzer erstellt und/oder automatisiert von einer Recheneinheit ermittelt werden. Dadurch kann sichergestellt werden, dass das wenigstens eine Außenmaß und/oder Innenmaß zur Durchführung des Verfahrens vorliegt.

Zudem ist es von Vorteil, wenn zumindest ein Teil der Verfahrensschritte, insbesondere das Abgleichen und das Teilen, so lange iterativ durchgeführt werden, bis das Fertigungsmodell vollständig in den Fertigungsbereich passt. So kann sichergestellt werden, dass nachfolgend an das iterative Verfahren das Fertigungsmodell mit der Fertigungsvorrichtung fertigbar ist. Das iterative Verfahren stellt dabei eine sehr einfache Variante dar, das Fertigungsmodell fertigbar zu gestalten.

Vorteilhafterweise werden nach dem Abgleichen des wenigstens einen Außenmaßes mit dem wenigstens einen Innenmaß und/oder vor dem Teilen in wenigstens zwei Teilmodelle und/oder Subteilmodelle zumindest zwei der Außenmaße des Gesamtmodells und/oder des Teilmodells mit zumindest zwei der Innenmaße des Fertigungsbereichs getauscht werden. Durch das Tauschen zumindest zwei der Außenmaße mit zumindest zwei der Innenmaße wird das Gesamtmodell und/oder das Teilmodell im Fertigungsbereich gedreht. Überschreitet wenigstens ein weiteres Außenmaß des Gesamtmodells ein korrespondierendes weiteres Innenmaß des Fertigungsbereichs in einer der Raumrichtungen, so kann durch den Tausch wenigstens ein Verfahrensschritt, insbesondere das Abgleichen und das Teilen, eingespart werden. Zusätzlich oder alternativ kann das Tauschen, insbesondere gemeinsam mit dem Abgleichen und/oder dem Teilen, so lange iterativ durchgeführt werden, bis das Fertigungsmodell vollständig in den Fertigungsbereich passt.

Des Weiteren ist es vorteilhaft, wenn nach dem Abgleichen des wenigstens einen Außenmaßes mit dem wenigstens einen Innenmaß und vor dem Teilen in wenigstens zwei Teilmodelle und/oder Subteilmodelle zumindest ein durch das Teilen resultierendes Außenmaß des Fertigungsmodells mit dem Innenmaß des Fertigungsbereichs abgeglichen wird. Beim Teilen und anschließenden Ausbilden des Verbindungselements wird wenigstens eines der Außenmaße in einer der Raumrichtungen verkleinert, wodurch ein anderes Außenmaß in einer anderen Raumrichtung vergrößert wird. Durch das Abgleichen des resultierenden Außenmaßes des Fertigungsmodells mit dem Innenmaß des Fertigungsbereichs kann somit vor dem Teilen abgeschätzt werden, ob alle Außenmaße in die Innenmaße passen und somit das Fertigungsmodell in der Fertigungsvorrichtung fertigbar ist. Dadurch können unnötige Verfahrensschritte vermieden werden.

Ferner ist es von Vorteil, wenn zumindest einer der Verfahrensschritte von einem Benutzer mit einer Recheneinheit, insbesondere einem darauf abgespeicherten Computerprogramm und/oder einer künstlichen Intelligenz, und/oder von einer derartigen Recheneinheit durchgeführt wird. Zusätzlich oder alternativ zum oben beschriebenen iterativen Prozess kann mit Hilfe einer künstlichen Intelligenz das Fertigungsmodell schnell und/oder mit möglichst wenigen Verfahrensschritten fertigbar gestaltet werden. Die künstliche Intelligenz kann dabei derart in den Verfahrensablauf eingreifen, dass möglich wenige Verfahrensschritte und/oder die Verfahrensschritte mit dem geringsten Aufwand durchgeführt werden. Zudem kann so ein unnötiges Teilen des Gesamtmodells, des Teilmodells und/oder des Subteilmodells vermieden werden.

Vorgeschlagen wird auch eine Recheneinheit zum Erstellen eines virtuellen dreidimensionalen Fertigungsmodells eines Körpers, insbesondere mit einem darauf abgespeicherten Computerprogramm und/oder einer künstlichen Intelligenz. Die Recheneinheit ist ausgebildet, zumindest einen Teil der Verfahrensschritte eines Verfahrens zum Erstellen eines virtuellen dreidimensionalen Fertigungsmodells eines Körpers gemäß der vorangegangenen Beschreibung auszuführen, wobei die genannten Merkmale einzeln oder in beliebiger Kombination vorhanden sein können. Zur Erfassung, Eingabe und/oder Ermittlung des wenigstens einen Außenmaßes und/oder Innenmaßes kann die Recheneinheit eine Eingangsschnittstelle aufweisen. So können von externen Eingabegeräten und/oder von einem Benutzer Daten, insbesondere Geometriedaten des Körpers und/oder der Fertigungsvorrichtung, in die Recheneinheit eingegeben werden. Zusätzlich oder alternativ kann die Recheneinheit eine Ausgangsschnittstelle zur Ausgabe der Fertigungsdaten an eine Fertigungsvorrichtung und/oder an ein computerlesbares Speichermedium aufweisen.

Ferner wird ein Computerprogramm und/oder eine künstliche Intelligenz vorgeschlagen, das/die bei Ausführung durch eine Recheneinheit diese veranlasst, zumindest einen Teil der Verfahrensschritte eines Verfahrens zum Erstellen eines virtuellen dreidimensionalen Fertigungsmodells eines Körpers gemäß der vorangegangenen Beschreibung auszuführen, wobei die genannten Merkmale einzeln oder in beliebiger Kombination vorhanden sein können.

Des Weiteren wird ein computerlesbares Speichermedium, insbesondere ein Datenspeicher, mit einem darauf abgespeicherten virtuellen dreidimensionalen Fertigungsmodell vorgeschlagen, das mit einem Verfahren, einer Recheneinheit, einem Computerprogramm und/oder einer künstlichen Intelligenz gemäß der vorangegangenen Beschreibung hergestellt wurde, wobei die genannten Merkmale einzeln oder in beliebiger Kombination vorhanden sein können. Als computerlesbares Speichermedium ist hierbei ein Medium zu verstehen, das das Fertigungsmodell speichert und/oder in einer nachfolgend beschriebenen Vorrichtung ausgelesen werden kann. Das computerlesbare Speichermedium kann dabei beispielsweise ein Flash-Speicher, eine Festplatte, eine Cloud und/oder ein optischer Speicher sein.

Ferner wird ein Herstellungsverfahren zur Herstellung eines Körpers vorgeschlagen. Bei dem Herstellungsverfahren wird ein virtuelles dreidimensionales Fertigungsmodell des Körpers mit einem Verfahren gemäß der vorangegangenen Beschreibung erstellt, wobei die genannten Merkmale einzeln oder in beliebiger Kombination vorhanden sein können.

Danach werden Fertigungsdaten für eine additive Fertigungsvorrichtung, insbesondere eine 3D-Druckvorrichtung, anhand des virtuellen dreidimensionalen Fertigungsmodells erstellt. Die Fertigungsdaten werden dabei aus dem Fertigungsmodell gebildet und können zusätzliche Informationen zur Fertigung enthalten. Anschließend wird der Körper in einem begrenzten Fertigungsbereich der additiven Fertigungsvorrichtung anhand der Fertigungsdaten gefertigt, wobei der Körper mehrteilig in Form von mehreren über zumindest ein Verbindungselement beweglich miteinander verbundenen Teilen gefertigt wird, die sich in einer Fertigungsstellung befinden, in welcher korrespondierende Fügeflächen der Teile voneinander beabstandet sind. Die miteinander verbundenen Teile des Körpers bilden dabei die virtuellen dreidimensionalen Teilmodelle in gefertigter Form nach. Die wenigstens zwei Teile des Körpers sind mittels des Verbindungselements formschlüssig und/oder kraftschlüssig derart miteinander verbunden, dass sich diese relativ zueinander bewegen können. Das Verbindungselement ist dabei vorteilhafterweise als Verbindungsgelenk ausgebildet.

Vorteilhaft ist es, wenn Teile des Körpers aus der Fertigungsstellung in eine Fügestellung, in welcher die korrespondierenden Fügeflächen der Teile aneinander anliegen, bewegt werden.

Ferner ist es von Vorteil, wenn Teile des Körpers in der Fügestellung, insbesondere über zumindest ein mit der additiven Fertigungsvorrichtung mitgefertigtes Arretierelement, arretiert werden. Das Arretierelement kann somit verhindern, dass die wenigstens zwei Teile des Körpers von der Fügestellung zurück in die Fertigungsstellung bewegt werden. Das zumindest eine Arretierelement kann dabei beispielsweise ein Clip und/oder ein Einrastelement sein.

Zudem kann mithilfe des Arretierelements und dem damit verbundenen Halten der Teilmodelle in der Fügestellung der wenigstens zwei korrespondierenden Teilmodelle anschließend an die Fertigung das Zusammenfügen von Teilen des Körpers zum Körper erleichtert werden.

Des Weiteren ist es von Vorteil, wenn der Körper in der Fügestellung einer Lösungsmittelatmosphäre ausgesetzt wird, so dass eine Oberfläche des Körpers geglättet und/oder die wenigstens zwei Teile des Körpers im Bereich ihrer aneinander anliegenden Fügeflächen stoffschlüssig miteinander verbunden werden.

Zudem ist es von Vorteil, wenn, insbesondere anschließend an das Verbinden der Teile des Körpers miteinander, das Verbindungselement und/oder das Arretierelement zumindest teilweise entfernt wird. Dadurch kann der Körper in seine ursprünglich angedachte, im Gesamtmodell abgebildete Form gebracht werden.

Zudem ist es von Vorteil, wenn der Körper in einem pulverbasierten 3D-Druckverfahren hergestellt wird. Pulverbasierte 3D-Druckverfahren weisen häufig den begrenzten Fertigungsbereich auf. Zusätzlich oder alternativ können hierbei auch eine Pulverauftragseinheit und/oder eine Bestrahlungseinheit in ihrem Wirkbereich auf diesen Fertigungsbereich begrenzt sein. Durch das Verfahren können somit auch in derartigen Druckverfahren große Körper vereinfacht hergestellt werden. Mit einem derartigen pulverbasierten 3D-Druckverfahren können Pulvermaterialien aus Kunststoff, Metall, Glas, Keramik und/oder Verbundwerkstoffen verwendet werden. Wird als Pulvermaterial Kunststoff verwendet, so wird das 3D-Druckverfahren als SLS bezeichnet. Vorteilhaft ist es dabei, wenn der Körper aus einem Elastomer, insbesondere TPU, hergestellt wird.

In einer vorteilhaften Ausgestaltung wird wenigsten einer der Teile mit einer Gitterstruktur hergestellt. Falls wenigstens einer der Teile des Körpers an wenigstens einer der Fügeflächen Gitterstäbe der Gitterstruktur aufweist, so kann das Verbindungselement und/oder das Arretierelement an diesen Gitterstäben angeordnet sein. Ebenso können die Teile des Körpers im Bereich der Gitterstäbe an deren Fügeflächen zusammengefügt werden.

Des Weiteren wird ein Körper, insbesondere ein Bauteil, vorgeschlagen. Der Körper ist mit einem Herstellungsverfahren gemäß der vorangegangenen Beschreibung hergestellt, wobei die genannten Merkmale einzeln oder in beliebiger Kombination vorhanden sein können.

Ferner wird eine Vorrichtung vorgeschlagen. Die Vorrichtung umfasst vorteilhafterweise eine Recheneinheit zum Erstellen eines virtuellen dreidimensionalen Fertigungsmodells eines Körpers. Zusätzlich oder alternativ umfasst die Vorrichtung eine additive Fertigungsvorrichtung zum Herstellen des Körpers. Zusätzlich oder alternativ umfasst die Vorrichtung eine Kammer zum Glätten einer Oberfläche des Körpers und/oder zum stoffschlüssigen Verbinden zweier Teile des Körpers mittels einer Lösungsmittelatmosphäre.

Die Recheneinheit vorzugsweise ausgebildet, zumindest einen Teil der Verfahrensschritte eines Verfahrens zum Erstellen eines virtuellen dreidimensionalen Fertigungsmodells eines Körpers gemäß der vorangegangenen Beschreibung auszuführen, wobei die genannten Merkmale einzeln oder in beliebiger Kombination vorhanden sein können. Zusätzlich oder alternativ ist die additive Fertigungsvorrichtung und/oder die Kammer ausgebildet, zumindest einen Teil der Verfahrensschritte eines Herstellungsverfahrens zur Herstellung eines Körpers gemäß der vorangegangenen Beschreibung auszuführen, wobei die genannten Merkmale einzeln oder in beliebiger Kombination vorhanden sein können.

Zusätzlich oder alternativ zu den vorstehenden Verfahren und/oder Vorrichtungen ist es vorteilhaft, wenn bei einem Verfahren zur Herstellung eines zusammengesetzten Körpers aus wenigstens zwei in einem additiven Fertigungsverfahren hergestellten Teilkörpern die wenigstens zwei Teilkörper in einer Kammer einer Lösungsmittelatmosphäre ausgesetzt werden, so dass eine Oberfläche der Teilkörper geglättet wird. Vorteilhaft ist es, wenn die wenigstens zwei Teilkörper derart in der Kammer platziert werden, dass sie sich an wenigstens einer Fügefläche berühren und somit an der wenigstens einen Fügefläche durch die Lösungsmittelatmosphäre eine stoffschlüssige Verbindung zwischen den wenigstens zwei Teilkörpern entsteht. Die zumindest zwei Teilkörper können gemäß der vorangegangenen Beschreibung anhand von einem Gesamtmodell des Körpers, das in zumindest zwei virtuelle Teilmodelle zellkonformen geteilt wurde, hergestellt worden sein. Zusätzlich oder alternativ können diese anhand von einem Fertigungsmodell einer Fertigungsstellung gemäß der vorangegangenen Beschreibung hergestellt worden sein. Die vorstehend genannten Merkmale können einzeln oder in beliebiger Kombination vorhanden sein.

Durch die Lösungsmittelatmosphäre werden chemische Bindungen an der Oberfläche der Teilkörper zumindest teilweise gelöst. Hierdurch können sich die Moleküle an der Oberfläche neu ordnen oder werden entfernt, wobei sich einerseits die Rauigkeit der Oberfläche reduziert. Andererseits entsteht hierdurch an der Fügefläche eine stoffschlüssige Verbindung zwischen den Teilkörpern. Ein separater Schritt des Zusammenfügens der Teilkörper kann somit eingespart werden. Ein in einem additiven Fertigungsverfahren hergestellter Teilkörper kann auf diese Weise beispielsweise mit wenigstens einem in einem Spritzgussverfahren hergestellten Teilkörper verbunden werden und/oder mit wenigstens einem weiteren in einem additiven Fertigungsverfahren hergestellten Teilkörper.

Es ist denkbar, dass zunächst die Teilkörper in der Kammer platziert werden und anschließend die Lösungsmittelatmosphäre in die Kammer eingebracht wird. Andererseits ist es denkbar, dass die Teilkörper in eine mit einer Lösungsmittelatmosphäre versehene Kammer eingeschleust werden. Die Lösungsmittelatmosphäre ist beispielsweise ein Aerosol, insbesondere ein Nebel, also ein Gemisch aus einem zerstäubten Lösungsmittel und beispielsweise Luft. Andererseits ist es denkbar Lösungsmitteldampf in reiner Form oder als Gasgemisch ebenfalls beispielsweise mit Luft zu verwenden.

Die Kammer kann beispielsweise zur Beschleunigung der Reaktion auf eine Temperatur von 25 bis 100 °C erwärmt werden. Vorzugsweise findet das Verfahren aber bei Zimmertemperatur statt. Die Lösungsmittelatmosphäre kann beispielsweise durch ein Versprühen eines Lösungsmittels oder durch ein Zerstäuben des Lösungsmittels, beispielsweise mittels eines Ultraschallzerstäubers hergestellt werden. Ein gezieltes Verdampfen des Lösungsmittels ist ebenfalls denkbar.

Aufgrund der Gefahr für die Gesundheit und einer potentiellen Explosionsgefahr ist die Kammer während der Präsenz der Lösungsmittelatmosphäre vorzugsweise hermetisch abgedichtet. Es ist denkbar, dass die Lösungsmittelatmosphäre vor einem Öffnen der Kammer am Ende des Verfahrens abgesaugt wird.

Es ist von Vorteil, wenn die wenigstens zwei Teilkörper an der wenigstens einen Fügefläche formschlüssig zusammengefügt werden. Dies verbessert den späteren Zusammenhalt der wenigstens zwei Teilkörper. Außerdem ist es auf diese Weise einfacher einen homogenen zusammengesetzten Körper herzustellen. Die Formschlüssigkeit kann sich beispielsweise dadurch ergeben, dass die Fügefläche zwischen den Teilkörpern von Begrenzungsflächen von Einheitszellen einer Gitterstruktur der Teilkörper gebildet werden.

Falls die Teilkörper jeweils eine Gitterstruktur aufweisen, berühren sich die Teilkörper beispielsweise entlang von Gitterstäben der Gitterstruktur. Diese Gitterstäbe können beispielsweise die Kanten von Einheitszellen der Gitterstruktur bilden. Die beschriebene Formschlüssigkeit kann sich hierbei auf die parallele Ausrichtung der Gitterstäbe beziehen. Eine Vielzahl an Fügeflächen kann hierbei aus einer Vielzahl von paarweise parallel ausgerichteten Gitterstäben bestehen.

Besondere Vorteile bringt es mit sich, wenn wenigstens einer der Teilkörper in einem pulverbasierten 3D-Druckverfahren hergestellt werden. Dieses Verfahren ermöglicht es, im Gegensatz zu anderen 3D-Druckverfahren, die Teilkörper ohne eine zusätzliche Stützstruktur zu drucken. Ein nachträgliches Entfernen einer Stützstruktur entfällt somit.

Bei pulverbasierten 3D-Druckverfahren werden die zu druckenden Körper Schicht für Schicht aus einem Pulver aufgebaut. Hierbei wird in der Regel mit der untersten Schicht begonnen, wobei beispielsweise ein auf eine Pulverschicht aufgetragenes Bindemittel das Pulver gezielt verhärtet und verbindet. Anschließend wird die nächste Pulverschicht aufgetragen und ebenfalls mit dem Bindemittel behandelt. Es ist ebenfalls denkbar das Pulver durch punktuelles Erhitzen zu erhärten und zu verbinden.

Der gedruckte Körper befindet sich hierbei zu jeder Zeit in einer Umgebung aus losem Pulver, die den Körper schützt und stützt. Der Körper weist nach diesem Verfahren in der Regel eine raue Oberfläche auf, die aber im Rahmen des Verfahrens in der Lösungsmittelatmosphäre geglättet wird. Selbstverständlich können beide oder alle der wenigstens zwei Teilkörper in dem pulverbasierten 3D-Druckverfahren hergestellt werden.

Ebenso ist es vorteilhaft, wenn wenigstens einer der zwei Teilkörper mit einer Gitterstruktur hergestellt wird. Durch die Gitterstruktur kann mit geringem Materialeinsatz ein großes Volumen ausgefüllt werden. Auch lässt sich die Elastizität des Teilkörpers durch die Gitterstruktur exakt steuern. Dies ist insbesondere bei Polsterungen vorteilhaft. Idealerweise ist die Fügefläche der Teilkörper im zusammengesetzten Körper, zumindest anhand einer inhomogenen Elastizität, nicht mehr erkennbar. Es können beide oder alle der wenigstens zwei Teilkörper mit einer Gitterstruktur hergestellt werden. Hierbei stimmt die Gitterstruktur der Teilkörper vorzugsweise überein.

Vorteilhaft ist es, wenn die wenigstens zwei Teilkörper derart in der Lösungsmittelatmosphäre platziert werden, dass sie sich an einer Vielzahl von Fügeflächen berühren, wobei die Vielzahl der Fügeflächen einer Vielzahl von Begrenzungsflächen der Einheitszellen der Struktur der Teilkörper entspricht. Hierdurch wird sichergestellt, dass sich die Strukturen der Teilkörper zu einer möglichst einheitlichen Struktur des zusammengesetzten Körpers ergänzen. Die Homogenität insbesondere in Bezug auf die Elastizität des Körpers wird hierdurch verbessert. Die beschriebene Struktur kann jede Struktur sein, die aus einer Vielzahl aus gleichen Einheitszellen, also kleinsten raumfüllenden Bauelementen, aufgebaut ist. Insbesondere ist die Struktur eine Gitterstruktur. Die Begrenzungsflächen trennen die einzelnen Einheitszellen voneinander. Sie müssen nicht zwangsläufig mit Material gefüllt sein. Auch beispielsweise miteinander verbundene Gitterstäbe können die Kanten einer Begrenzungsfläche bilden.

Vorzugsweise wird dieser Aspekt bereits bei dem Entwurf bzw. bei der Unterteilung des Körpers in Teilkörper vor der Herstellung der Teilkörper berücksichtigt. Beispielsweise wird die Gitterstruktur des Körpers entlang von Begrenzungsflächen der Einheitszellen der Struktur in die Teilkörper getrennt (sog. "zellkonformes Schneiden").

Auch ist es von Vorteil, wenn die Teilkörper derart zusammengefügt werden, dass eine einheitliche Gitterstruktur des zusammengesetzten Körpers entsteht. Wie bereits beschrieben, kann hierdurch die Homogenität, insbesondere in Bezug auf die Elastizität des Körpers, verbessert werden.

Vor allem wenn der Körper eine Polsterung oder einen Teil einer Polsterung darstellt, mit der ein späterer Benutzer direkten Kontakt hat, können Inhomogenitäten der Elastizität unangenehm für den Benutzer und somit nachteilig für einen wirtschaftlichen Erfolg des Körpers sein. Dies gilt es zu vermeiden.

Vorteile bringt es mit sich, wenn die wenigstens zwei Teilkörper mit wenigstens einem Verbindungselement, insbesondere einem Verbindungsgelenk, hergestellt werden. Zusätzlich oder alternativ ist es vorteilhaft, wenn die wenigstens zwei Teilkörper über das Verbindungselement zusammengeklappt werden, so dass die beiden Teilkörper mit ihren korrespondierenden Fügeflächen aneinander anliegen. Ein fehlerfreies Zusammensetzen der Teilkörper entlang der wenigstens einen Fügefläche kann hierdurch gewährleistet werden. Insbesondere kann die Bewegungsfreiheit der Teilkörper zueinander durch ein oder mehrere Gelenke derart eingeschränkt sein, dass die Teilkörper nur auf eine Art zu dem Körper zusammengesetzt werden können. Insbesondere ein "Zusammenklappen" der Teilkörper zu dem Körper ist denkbar. Das Verbindungsgelenk bzw. die Verbindungsgelenke können hierbei ebenfalls durch das additive Herstellungsverfahren hergestellt werden. Gegebenenfalls kann das Gelenk bzw. können die Gelenke nach dem Verbinden der Teilkörper zu dem Körper wieder entfernt werden.

Bei einem besonders breiten Körper, der eine Breite der Druckvorrichtung überschreitet, ist es denkbar, den Körper in wenigstens zwei übereinander druckbare Teilkörper zu unterteilen, die gegebenenfalls mit dem beschriebenen Verbindungsgelenk oder mit den beschriebenen Verbindungsgelenken verbunden sind. Insbesondere zwei Verbindungsgelenke können vorgesehen sein.

Des Weiteren ist es vorteilhaft, wenn die wenigstens zwei Teilkörper aus einem Thermoplast, insbesondere Polyamid 12 (PA12) und/oder einem Elastomer, insbesondere TPU, hergestellt werden. Einerseits wird hierdurch die Herstellung der Teilkörper erleichtert. Andererseits entsteht hierdurch nach dem Zusammenfügen der Teilkörper beispielsweise ein elastisch verformbarer aber formstabiler Körper, der insbesondere als Polsterung eingesetzt werden kann.

Beispiele für Elastomere sind Vulkanisate von Natur- oder Silikonkautschuk. Die Abkürzung TPU steht für thermoplastisches Polyurethan. Polyurethane sind Kunststoffe oder Kunstharze, die aus einer Polyadditionsreaktion von Dialkoholen oder Polyolen mit Polyisocyanaten entstehen. Vor allem Polsterungen oder Materialien zur Wärmeisolierung lassen sich vorteilhaft aus aufgeschäumtem TPU herstellen. Die thermoplastischen Eigenschaften sind besonders vorteilhaft bei der Herstellung von Produkten aus diesen Materialien.

Besondere Vorteile bringt es mit sich, wenn die Lösungsmittelatmosphäre Chloroform, Tetrahydrofuran, Dimethylformamid, Dimethylacetamid, N-Methylpyrrolidon, Dimethylsulfoxid, Hexafluorisopropanol, Pyridin und/oder Benzylalkohol enthält. Diese Lösungsmittel sind in der Lage, vor allem TPU aufzulösen und somit geeignet, in einer Atmosphäre die Oberfläche der Teilkörper zu glätten und eine stoffschlüssige Verbindung zwischen den Teilkörpern herzustellen. Es ist denkbar eine Mischung aus verschiedenen Lösungsmitteln in der Lösungsmittelatmosphäre zu verwenden. Wie bereits beschrieben, kann zur Herstellung der Lösungsmittelatmosphäre aus diesen Lösungsmitteln ein Aerosol und/oder ein Dampf hergestellt werden.

Der zusammengesetzte Körper ist aus wenigstens zwei Teilkörpern zusammengesetzt, wobei wenigstens einer der Teilkörper in einem additiven Fertigungsverfahren hergestellt ist. Er zeichnet sich dadurch aus, dass er gemäß eines Verfahrens der vorherigen Beschreibung hergestellt ist. Wie bereits beschrieben, weist der Körper den Vorteil auf, dass ein Zusammenfügen der Teilkörper bereits während eines Glättens der Oberfläche der Teilkörper stattfindet, und damit ein zusätzlicher Arbeitsschritt des Zusammenfügens während der Herstellung des Körpers eingespart werden kann. Außerdem kann der Körper eine Größe aufweisen, die den Druckbereich einer Druckvorrichtung für ein additives Fertigungsverfahren übersteigt. Es ist denkbar, dass der Körper aus einer Vielzahl von Teilkörpern zusammengesetzt ist.

Der Körper weist beispielsweise eine Gitterstruktur auf, wobei die Gitterstruktur vorzugsweise homogen über die gesamte Ausdehnung des Körpers ist. Beispielsweise wiederholen sich Motive der Gitterstruktur in regelmäßigen Abständen. Der Körper ist beispielsweise aus einem Elastomer und insbesondere aus TPU hergestellt. Der Körper ist insbesondere als Polsterung oder Teil einer Polsterung mit einer homogenen Elastizität ausgebildet.

Weitere Vorteile der Erfindung sind in den nachfolgenden Ausführungsbeispielen beschrieben. Es zeigen:
- **Figur 1**: eine schematische Darstellung einer Vorrichtung mit einer Recheneinheit, einer additiven Fertigungsvorrichtung, einem herzustellenden Körper und einem Speichermedium,
- **Figur 2**: eine perspektivische Ansicht eines Grundkörpers mit einer Schnittfläche,
- **Figur 3**: eine perspektivische Ansicht eines mit Einheitszellen gefüllten Grundkörpers,
- **Figur 4**: eine Zuordnung von Mittelpunkten der Einheitszellen auf eine Seite der Schnittfläche,
- **Figur 5**: eine Zuordnung der Einheitszellen auf eine Seite der Schnittfläche,
- **Figur 6**: eine perspektivische Ansicht einer dreidimensionalen zellkonformen Trennfläche,
- **Figur 7**: eine perspektivische Ansicht eines Gesamtmodells mit einer aus einer Vielzahl von Zellen ausgebildeten Gitterstruktur,
- **Figur 8**: ein erstes Teilmodell mit der zellkonformen teilenden Trennfläche,
- **Figur 9**: eine detaillierte Schnittansicht der beiden voneinander geteilten Teilmodelle im Bereich der Trennfläche,
- **Figur 10**: eine perspektivische Ansicht des in zwei Teilmodelle geteilten Gesamtmodells,
- **Figur 11 und 12**: schematische Darstellungen des Verfahrens zum Erstellen eines virtuellen dreidimensionalen Fertigungsmodells eines Körpers,
- **Figur 13**: eine schematische Darstellung einer Vorrichtung mit einer Recheneinheit und einer additiven Fertigungsvorrichtung beim Fertigen eines Körpers,
- **Figur 14**: eine schematische Darstellung eines Körpers in Fügestellung in einer Kammer zum Glätten und/oder zum stoffschlüssigen Verbinden,
- **Figur 15**: ein zweidimensionales Schema von Teilkörpern vor dem Zusammenfügen und
- **Figur 16**: ein zweidimensionales Schema der Herstellung des Körpers durch stoffschlüssiges Verbinden der Teilkörper mittels einer Lösungsmittelatmosphäre.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

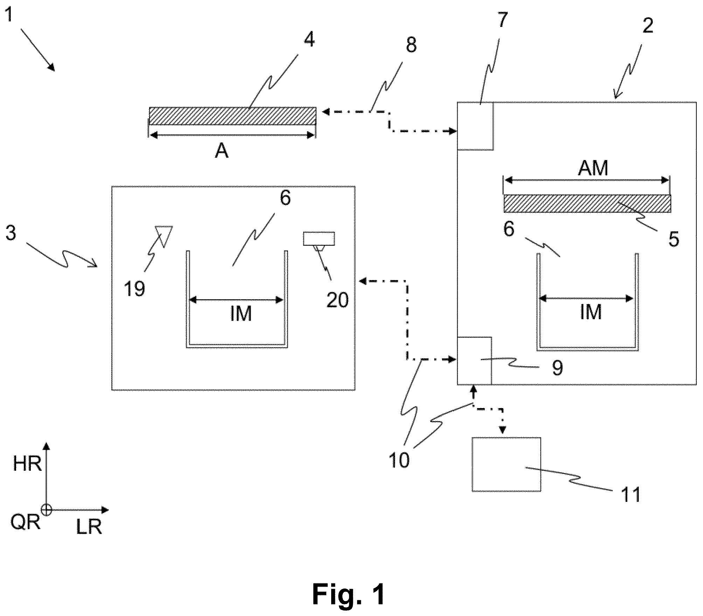

Figur 1 zeigt eine schematische Darstellung einer Vorrichtung 1 mit einer Recheneinheit 2, einer additiven Fertigungsvorrichtung 3 und einem herzustellenden Körper 4. Als herzustellender Körper 4 ist dabei der Körper 4 zu verstehen, der mit Hilfe des Herstellungsverfahrens und/oder der additiven Fertigungsvorrichtung 3 hergestellt werden soll. Mit Hilfe der Recheneinheit 2 wird basierend auf dem herzustellenden Körper 4 ein virtuelles dreidimensionales Gesamtmodell 5 ausgebildet und/oder erstellt. Das Gesamtmodell 5 und der herzustellende Körper 4 weisen dabei jeweils gleiche Außenmaße AM in den drei Raumrichtungen, also in Längsrichtung LR, Querrichtung QR und Hochrichtung HR, auf. Die Fertigungsvorrichtung 3 weist einen begrenzten Fertigungsbereich 6 auf. Der Fertigungsbereich 6 spannt hierfür in den drei Raumrichtungen, also in Längsrichtung LR, Querrichtung QR und Hochrichtung HR, jeweils ein begrenztes Innenmaß IM auf. Dies kann es erforderlich machen, dass das Gesamtmodell 5 geteilt werden muss, damit es in den begrenzten Fertigungsbereich 6 gefertigt, insbesondere gedruckt werden kann.

Die Recheneinheit 2 kann zur Erfassung, Eingabe und/oder Ermittlung des wenigstens einen Außenmaßes AM und/oder Innenmaßes IM wenigstens eine Eingangsschnittstelle 7 aufweisen. Mittels der Eingangsschnittstelle 7 können Geometriedaten 8 des herzustellenden Körpers 4 und/oder der Fertigungsvorrichtung 3 automatisch und/oder mit Hilfe eines Benutzers erfasst, eingegeben und/oder ermittelt werden. Basierend auf diesen Geometriedaten 8 kann das Gesamtmodell 5 erstellt werden. Zusätzlich oder alternativ kann ein digitales Abbild der Fertigungsvorrichtung 3 und/oder das Innenmaß IM in der Recheneinheit 2 eingegeben und/oder gespeichert werden. Zusätzlich oder alternativ kann die Recheneinheit 2, wie im dargestellten Ausführungsbeispiel gezeigt, eine Ausgangsschnittstelle 9 zur Ausgabe von Fertigungsdaten 10 an die Fertigungsvorrichtung 3 und/oder an ein computerlesbares Speichermedium 11 aufweisen. Eben diese Fertigungsdaten 10 können mit Hilfe der Recheneinheit 2 erstellt werden.

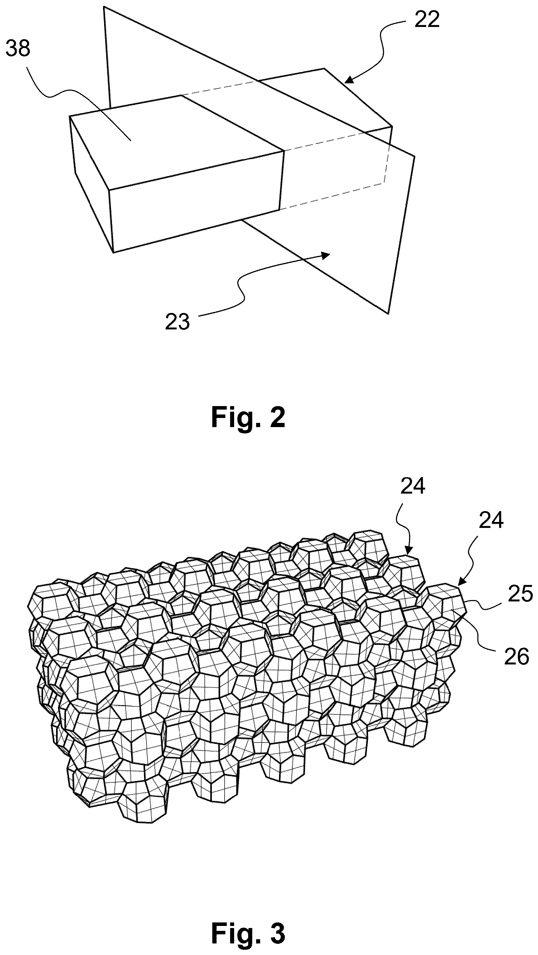

In den Figuren 2 bis 10 ist ein Verfahren, insbesondere ein computerimplementiertes Verfahren, zum Teilen des virtuellen dreidimensionalen Gesamtmodells 5 veranschaulicht. Wie vorstehend erwähnt, kann es notwendig sein, dass das Gesamtmodell 5 in zumindest zwei Teilmodelle 13 geteilt werden muss, damit dieses in einem begrenzten Fertigungsbereich 6 der Fertigungsvorrichtung 3, insbesondere einem 3D-Drucker, gefertigt werden können.

Hierfür wird gemäß Figur 2 zunächst ein dreidimensionaler virtueller Grundkörper 22 bereitgestellt. Dies kann in einem entsprechenden Programm manuell von einem Benutzer erfolgen. Alternativ können die Geometriedaten 8 des Grundkörpers 22 auch über eine Schnittstelle eingespielt werden. Der Grundkörper 22 gibt hierbei die grundlegende Geometrie des zu drückenden Körpers 4 wieder. Anschließend wird zumindest eine Schnittfläche 23 festgelegt, die den Grundkörper 22 teilt. Die genaue Position und/oder Geometrie der Schnittfläche 23 kann manuell von einem Benutzer oder automatisiert von der Recheneinheit 2 festgelegt werden. Die Schnittfläche 23 kann hierbei eben, gekrümmt und/oder geknickt sein. Alternativ oder zusätzlich kann die Schnittfläche auch eine Freiformgeometrie aufweisen. Ferner kann die Schnittfläche aus mehreren unterschiedlichen und/oder gleichen Abschnitten zusammengesetzt sein.

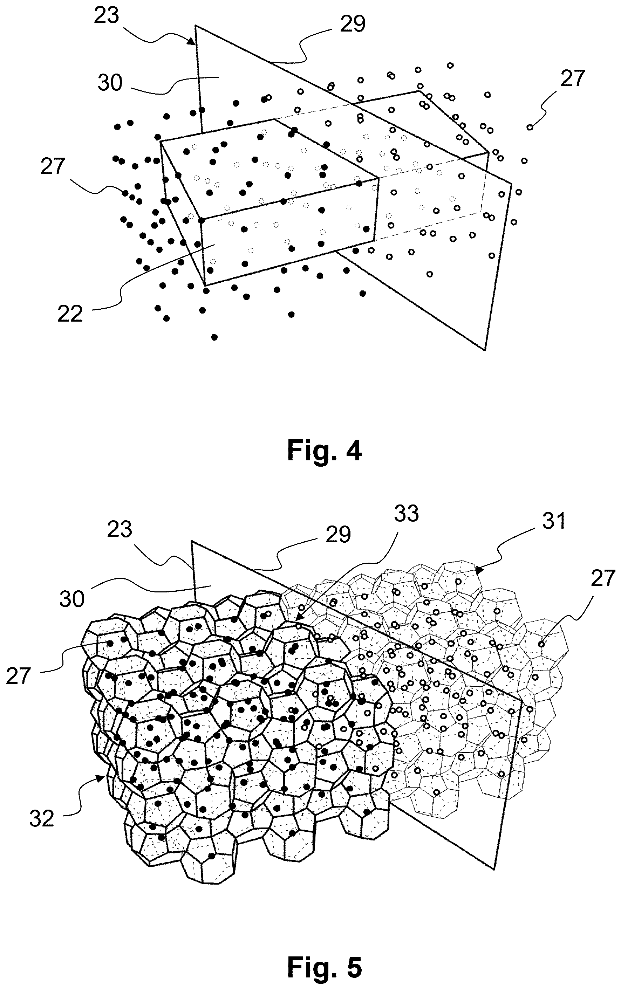

Anschließend wird in einem folgenden Schritt gemäß Figur 3 der Grundkörper 22, insbesondere sein Volumen, mit einer Vielzahl von Einheitszellen 24 gefüllt. Vorzugsweise wird das Volumen des Grundkörpers 22 vollständig mit derartigen Einheitszellen 24 aufgefüllt. Aus Gründen der Übersichtlichkeit sind in Figur 3 nur zwei dieser Einheitszellen mit einem Bezugszeichen versehen. Der Grundkörper 22 kann mit einer einzigen Art von Einheitszellen 24 gefüllt sein. Alternativ können auch unterschiedliche Typen und Arten von Einheitszellen 24 verwendet werden, die sich in ihrer äußeren Form voneinander unterscheiden. Jede dieser Einheitszellen 24 umfasst mehrere Kanten 25, die die äußere Form der jeweiligen Einheitszelle 24 definieren. Die äußere Form der jeweiligen Einheitszelle 24 wird ferner durch eine entsprechende Zelloberfläche 26 gebildet. Des Weiteren umfasst jede dieser Einheitszellen 24 einen Mittelpunkt 27 (vergleiche Figur 4).

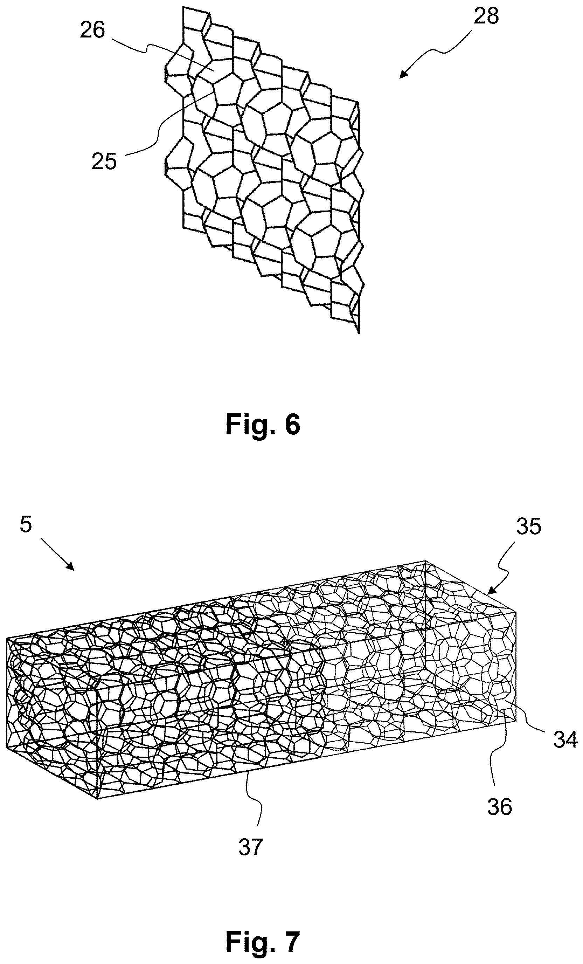

Ein wesentlicher Schritt des Verfahrens besteht darin, dass eine in Figur 6 dargestellte virtuelle Trennfläche 28 für das Gesamtmodell 5 des Körpers 4 erstellt wird, wobei die Trennfläche 28 eine dreidimensionale zellkonforme Form aufweist. Unter dem Begriff "zellkonform" ist eine Form der Trennfläche 28 zu verstehen, die an der Außenfläche mehrerer dieser Einheitszellen 24 verläuft und demnach keine der Einheitszellen 24 zerteilt. Im Grunde genommen verläuft die Trennfläche 28 demnach auf den Kanten 25 und/oder Zelloberflächen 26 der benachbarten Einheitszellen 24.

Die dreidimensionale zellkonforme Form der Trennfläche 28 wird vorzugsweise von einem Algorithmus erstellt, der auf der Recheneinheit 2 abgespeichert ist. Die dreidimensionale zellkonforme Form der Trennfläche 28 wird anhand der Zelloberfläche 26 und/oder der Kanten 25 der jeweils zur Schnittfläche 23 benachbarten Einheitszellen 24 erstellt. Hierfür erfolgt gemäß Figur 4 zunächst eine Zuordnung der Einheitszellen 24 relativ zur Schnittfläche 23. Demnach umfasst die Schnittfläche 23 eine erste Seite 29 und eine gegenüberliegende zweite Seite 30. Zumindest die im Bereich der Schnittfläche 23 befindlichen ganzen Einheitszellen 24 werden jeweils einer der beiden Seiten 29, 30 der Schnittfläche 23 zugeordnet. Vorzugsweise erfolgt eine entsprechende Zuordnung zumindest für diejenigen Einheitszellen 24, die durch die Schnittfläche 23 geschnitten sind. Insbesondere werden jedoch alle Einheitszellen 24, mit denen der Grundkörper 22 aufgefüllt wurde, einer Seite 29, 30 der Schnittfläche 23 zugeordnet.

Wie aus Figur 4 und 5 hervorgeht, erfolgt die Zuordnung der Einheitszellen 24 über ihre jeweiligen Mittelpunkte 27. So werden die ganzen Einheitszellen 24 jeweils derjenigen Seite 29, 30 der Schnittfläche 23 zugeordnet, auf der sich auch ihr Mittelpunkt 27 befindet. Zur Visualisierung der Zuordnung sind in Figur 4 und 5 alle Mittelpunkte 27 derjenigen Einheitszellen 24, die der ersten Seite 29 zugeordnet sind, als Punkte dargestellt und alle Mittelpunkte 27 derjenigen Einheitszellen 24, die der zweiten Seite 30 zugeordnet sind, als Kreise dargestellt.

Gemäß Figur 5 ist am Ende dieses Verfahrensschritts jeder der beiden Seiten 29, 30 der Schnittfläche 23 eine jeweilige Einheitszellengruppe 31, 32 zugeordnet. Alternativ kann eine Zuordnung auch nur für eine der beiden Seiten 29, 30 der Schnittfläche 23 erfolgen. Die beiden Einheitszellengruppen 31, 32 weisen im Bereich der Schnittfläche 23 eine dreidimensionale zellkonforme Stoßfläche 33 auf. An dieser Stoßfläche 33 liegen die beiden Einheitszellengruppen 31, 32 bündig aneinander an. Darstellung bedingt ist in Figur 5 lediglich die Außenkontur dieser Stoßfläche 33 ersichtlich.

Die in Figur 6 dargestellte Trennfläche 28 wird nunmehr anhand von zumindest einer der beiden Einheitszellengruppen 31, 32 erstellt. Demnach wird in einem weiteren Verfahrensschritt die Form der Trennfläche 28 korrespondierend und/oder anhand der dreidimensionalen zellkonformen Stoßfläche 33 zumindest einer der beiden Einheitsgruppen 31, 32 erstellt. Wie aus Figur 6 hervorgeht, weist die Trennfläche 28 somit eine zellkonforme Form auf, die mit den Kanten 25 und/oder der Zelloberfläche 26 derjenigen Einheitszellen 24 korrespondiert, die die Stoßfläche 33 der beiden Einheitsgruppen 31, 32 bilden. Die Trennfläche 28 weist somit Kanten 25 und/oder Zelloberflächen 26 der zu ihr benachbarten Einheitszellen 24 auf, die ihre Form und/oder Geometrie festlegen.

Vor, während oder nach dem Erstellen der virtuellen dreidimensionalen Trennfläche 28 wird aus dem in Figur 3 dargestellten Grundkörper 22, der mit einer Vielzahl von ganzen und/oder geschlossenen Einheitszellen 24 aufgefüllt wurde, das in Figur 7 dargestellte Gesamtmodell 5 des Körpers 4 erstellt. Das Gesamtmodell 5 weist hierbei eine Vielzahl von Zellen 34 auf, die zusammen eine Gitterstruktur 35 ausbilden. Bei dem Gesamtmodell 5 des Körpers 4 handelt es sich um ein Volumenmodell. Hierfür werden die in Figur 3 dargestellten Einheitszellen 24 mit Streben 36 ersetzt, die selbst ein Volumen aufweisen. Die Streben 36 erstrecken sich entlang der Kanten 25 der Einheitszellen 24 und bilden die zu den Einheitszellen 24 korrespondierenden Zellen 34, die wiederum die Gitterstruktur 35 ausbilden.

Das in Figur 7 dargestellte Gesamtmodell 5 mit seiner Gitterstruktur 35 kann eine Oberflächengitterstruktur 37 umfassen, die eine Außenfläche der Gitterstruktur 35 bildet. Zur Erstellung der Oberflächengitterstruktur 37 werden die in Figur 3 dargestellten Einheitszellen 24 mit einer in Figur 2 dargestellten Außenfläche 38 des Grundkörpers 22 verschnitten.

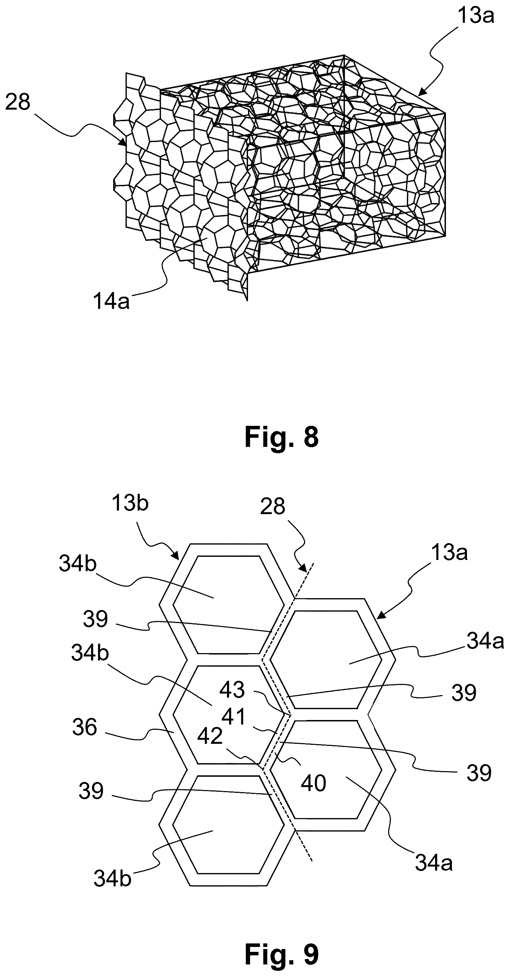

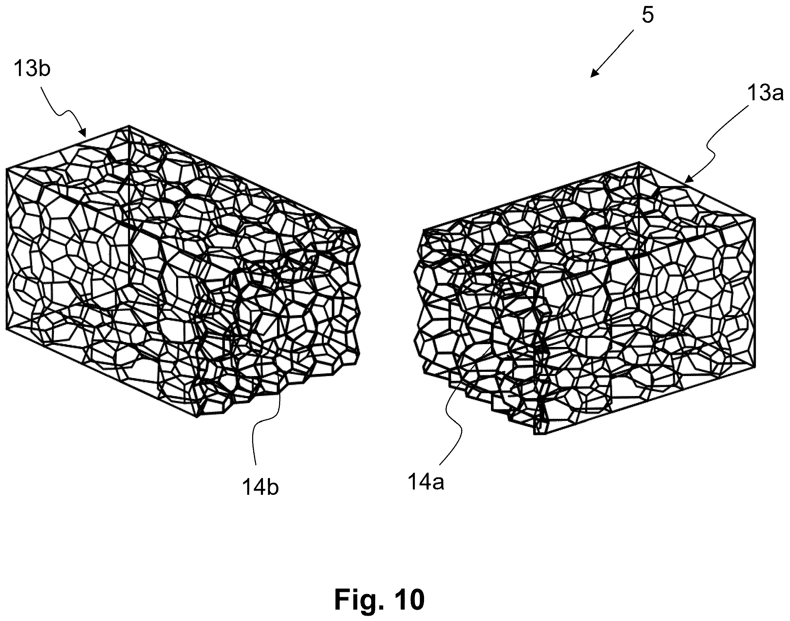

Die Gitterstruktur 35 des in Figur 7 dargestellten Gesamtmodells 5 kann nun mit und/oder entlang der in Figur 6 dargestellten Trennfläche 28 in die in Figur 10 dargestellten Teilmodelle 13a, 13b geteilt werden. Figur 8 zeigt eines der beiden Teilmodelle 13a mit der zellkonformen teilenden Trennfläche 28. Wie aus Figur 8 hervorgeht, sind die Zellen 34 im Bereich der Trennfläche 28 geschlossen. Keine der Streben 36 dieser Zellen 34 ist durchtrennt.

Figur 9 zeigt die zellkonforme Teilung des Gesamtmodells 5 in die beiden Teilmodelle 13a, 13b in einem Detailausschnitt. So weist das erste Teilmodell 13a erste Zellen 34a und das zweite Teilmodell 13b zweite Zellen 34b auf. Sowohl die ersten Zeilen 34a als auch die zweiten Zellen 34b sind geschlossen. Die jeweils zueinander benachbarten ersten Zellen 34a des ersten Teilmodells13a und zweiten Zellen 34b des zweiten Teilmodells 13b teilen sich gemeinsame Strebe 36, die im Folgenden als Gemeinschaftsstreben 39 bezeichnet werden. Wie aus Figur 9 ersichtlich ist, werden diese Gemeinschaftsstreben 39 der Gitterstruktur 35 mittels der zellkonformen Trennfläche 28 derart geteilt, dass die korrespondierenden Zellen 34 ganz und/oder geschlossen bleiben. Demnach werden die Gemeinschaftsstreben 39 durch die zellkonforme Trennfläche 28 nicht in ihrer Querrichtung, sondern in ihrer jeweiligen Längsrichtung geteilt. Infolgedessen erstrecken sich die Teile 40, 41 einer jeweiligen Gemeinschaftsstrebe 39 jeweils lückenlos und/oder durchgängig zwischen zwei Knotenpunkten 42, 43 der jeweils korrespondierenden Zelle 34. Die korrespondierenden Zellen 34a, 34b bleiben somit ganz und/oder geschlossen. Hierdurch ist eine sehr hohe Stabilität der Gitterstruktur 35 gewährleistet. In dem in Figur 9 dargestellten Ausführungsbeispiel sind die Gemeinschaftsstreben 39 achssymmetrisch geteilt. Alternativ kann aber auch eine asymmetrische Teilung erfolgen, so dass die beiden Teile 40, 41 zueinander unterschiedlich ausgebildet sind.

Figur 10 zeigt das Gesamtmodell 5 mit seinen Teilmodellen 13a, 13b. Beide Teilmodelle 13a, 13b weisen nunmehr aufgrund der zellkonformen Teilung eine jeweils zueinander korrespondierende Fügeflächen 14a, 14b auf. Jede dieser zueinander korrespondierenden Fügeflächen 14a, 14b ist aus Teilen 40, 41 der Gemeinschaftsstreben 39 ausgebildet. Beim Fügen dieser beiden Teilmodelle 13a, 13b entsteht aus den beiden zueinander korrespondierenden Teilen 40, 41 wieder eine vollständige Gemeinschaftsstrebe 39.

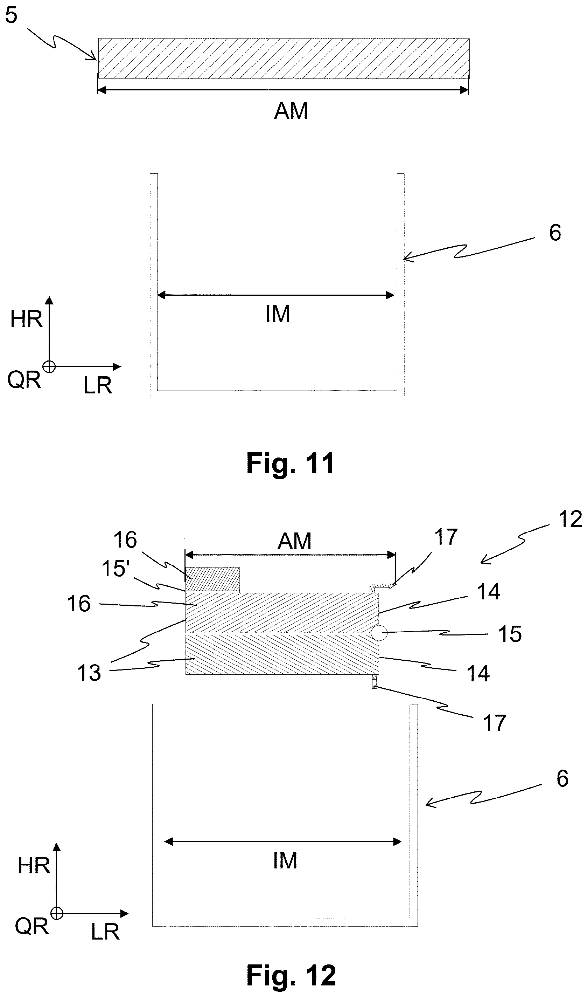

Die Figuren 11 und 12 zeigen einen beispielhaften Verfahrensablauf eines Verfahrens zum Erstellen eines virtuellen dreidimensionalen Fertigungsmodells 12 eines Körpers 4. Dieses kann sich an das vorstehende Verfahren zum Teilen des Gesamtmodells 5 anschließen, wobei die vorstehenden Merkmale einzeln oder in beliebiger Kombination vorhanden sein können. Der hier beschriebene Verfahrensablauf kann komplett oder zum Teil in der Recheneinheit 2 der Figur 1 ausgeführt werden. In Figur 11 ist dabei das Gesamtmodell 5 und der begrenzte Fertigungsbereich 6 dargestellt. Das Außenmaß AM des Gesamtmodells 5 überschreitet im gezeigten Ausführungsbeispiel das korrespondierende Innenmaß IM des Fertigungsbereichs 6 zumindest in Längsrichtung LR. Zusätzlich oder alternativ kann das Außenmaß AM des Gesamtmodells 5 in einer anderen Raumrichtung, beispielsweise in Querrichtung QR, das korrespondierende Innenmaß IM des Fertigungsbereichs 6 überschreiten. Dies kann in einem zusätzlichen und/oder im gleichen Verfahrensschritt abgeglichen werden.

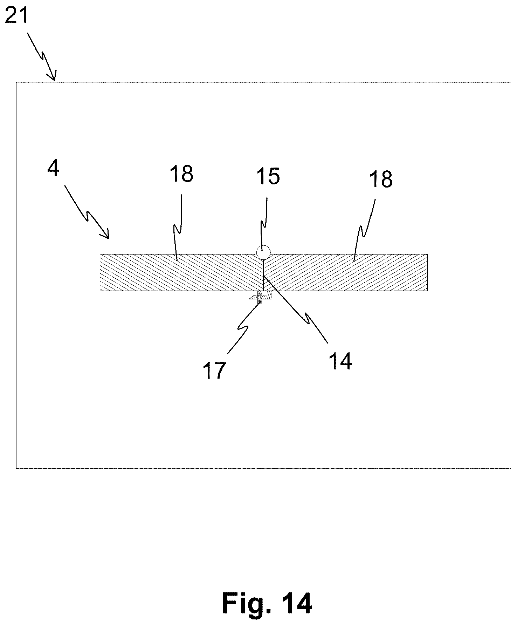

Figur 12 zeigt einen anschließend an den Verfahrensschritt der Figur 11 folgenden Verfahrensschritt. Das Gesamtmodell 5 des Ausführungsbeispiels der Figur 11 wurde in zwei Teilmodelle 13 geteilt. Ebenso ist es vorstellbar, dass das Gesamtmodell 5 in mehrere Teilmodelle 13 geteilt wird. Jedes der Teilmodelle 13 weist nun eine Fügefläche 14 auf, welche in einem späteren Herstellungsverfahren zum Zusammenfügen dienen können. Zusätzlich dazu wurde ein Verbindungselement 15, das die zwei Teilmodelle 13 miteinander verbindet, ausgebildet. Mittels des Verbindungselements 15 sind die zwei Teilmodelle 13 derart beweglich miteinander verbunden, dass diese relativ zueinander aus einer hier dargestellten Fertigungsstellung, in welcher die korrespondierenden Fügeflächen 14 der Teilmodelle 13 voneinander beabstandet sind, in eine Fügestellung, in welcher die korrespondierenden Fügeflächen 14 der Teilmodelle 13 aneinander anliegen, bewegt werden können. Ein Körper 4 in Fügestellung ist beispielsweise in Figur 14 gezeigt. Im gezeigten Ausführungsbeispiel ist das Verbindungselement 15 als Verbindungsgelenk ausgebildet, mittels welchem die zwei Teilmodelle 13 relativ zueinander verschwenkt werden können.

Zusätzlich zu den zwei Teilmodellen 13 sind in Figur 12 zwei Subteilmodelle 16 dargestellt, wobei eines der zwei Teilmodelle 13 eines der Subteilmodelle 16 ist. Zusätzlich oder alternativ kann das andere Teilmodell 13 in Subteilmodelle 16 geteilt werden. Ebenso ist es vorstellbar, dass wenigstens eines der Teilmodelle 13 in mehrere Subteilmodelle 16 geteilt wird. Hierbei wurde ein zusätzlicher optionaler Iterationsschritt des Verfahrens durchgeführt. Bei diesem optionalen Iterationsschritt wurde wenigstens eines der Außenmaße AM der in der Fertigungsstellung befindlichen Teilmodelle 13 mit dem korrespondierenden Innenmaß IM des Fertigungsbereichs 6 abgeglichen. Im gezeigten Ausführungsbeispiel wird das Außenmaß AM mit dem korrespondierenden Innenmaß IM in Querrichtung QR abgeglichen. Da das Außenmaß AM eines der in der Fertigungsstellung befindlichen Teilmodelle 13 das Innenmaß IM des Fertigungsbereichs 6 in Querrichtung QR überschreitet, wurde dieses Teilmodell 13 in zwei Subteilmodelle 16 geteilt und mit Hilfe eines weiteren Verbindungselements 15' in die Fertigungsstellung bewegt. In der Fertigungsstellung sind im gezeigten Ausführungsbeispiel die zwei Teilmodelle 13 und die Subteilmodelle 16 in Hochrichtung HR übereinander angeordnet.

Zudem ist vorteilhafterweise an wenigstens einem der Teilmodelle 13 und/oder Subteilmodelle 16 wenigstens ein Arretierelement 17 angeordnet. Im gezeigten Ausführungsbeispiel ist jeweils ein Teil des Arretierelements 17 an jedem der zwei Teilmodelle 13 angeordnet. Das Arretierelement 17 ist hierbei als Rastnase und Aufnahme für die Rastnase ausgebildet. Das Arretierelement 17 kann die zwei korrespondierenden Teilmodelle 13 in der Fügestellung, in der die zwei Fügeflächen 14 aneinander anliegen, arretieren. Ein Körper 4 in Fügestellung ist beispielsweise in Figur 14 gezeigt. Ebenso ist es vorstellbar, dass das Arretierelement 17 im Verbindungselement 15 integriert ist. Zusätzlich oder alternativ kann wenigstens eines der Subteilmodelle 16 das Arretierelement 17 aufweisen.

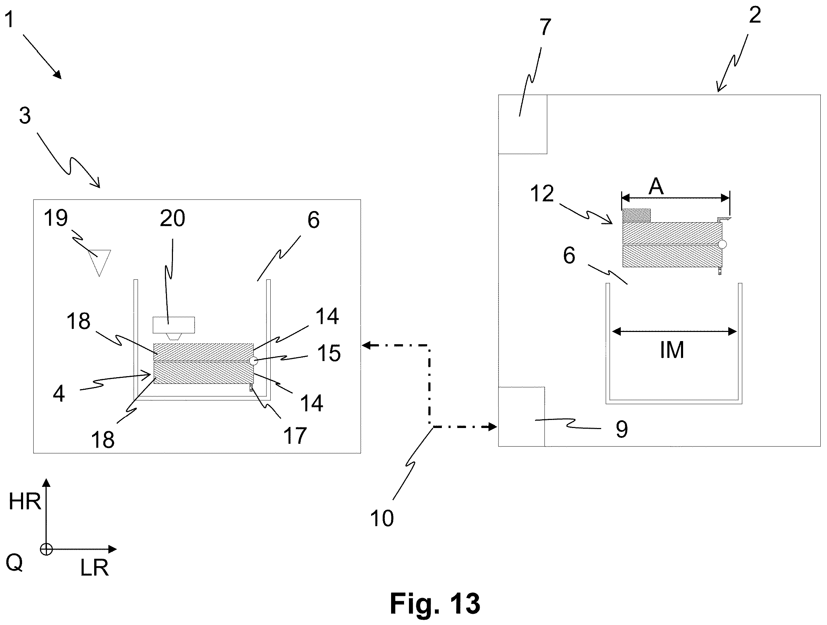

Im gezeigten Ausführungsbeispiel der Figur 12 ist damit das Fertigungsmodell 12 erstellt. Das Fertigungsmodell 12 weist dabei die zwei Teilmodelle 13, die zwei Subteilmodelle 16, die Verbindungselemente 15, 15' sowie das Arretierelement 17 auf. Das Außenmaß AM des Fertigungsmodells 12 unterschreitet in jeder der Raumrichtungen LR, QR, HR das Innenmaß IM des Fertigungsbereichs 6 und kann somit mit der Fertigungsvorrichtung 3 der Figur 1 gefertigt und/oder hergestellt werden. Hierfür werden, insbesondere mittels der Recheneinheit 2 der Vorrichtung 1 des Ausführungsbeispiels der Figur 1, aus dem Fertigungsmodell 12 die Fertigungsdaten 10 erstellt und an die Fertigungsvorrichtung 3 gesendet. Eben dieser Verfahrensschritt ist in der Figur 13 dargestellt.

In Figur 13 ist eine schematische Darstellung einer Vorrichtung 1 mit einer Recheneinheit 2 und einer additiven Fertigungsvorrichtung 3 beim Fertigen eines Körpers 4 gezeigt. Die Recheneinheit 2 hat bereits das Fertigungsmodell 12, insbesondere gemäß der vorangegangenen Beschreibung, erstellt. Die Recheneinheit 2 kann hierfür ein Computerprogramm und/oder eine künstliche Intelligenz aufweisen, das/die zumindest einen Teil der Verfahrensschritte des Verfahrens zum Erstellen des virtuellen dreidimensionalen Fertigungsmodells 12 des Körpers 4 ausführt.

Das Fertigungsmodell 12 ist hierbei ähnlich zum Ausführungsbeispiel der Figur 12 ausgebildet. Aus dem Fertigungsmodell 12 werden anschließend die Fertigungsdaten 10 erstellt und mittels der Ausgangsschnittstelle 9 an die Fertigungsvorrichtung 3 übermittelt. Die Fertigungsvorrichtung 3 hat bereits die ersten Schichten des Körpers 4 erstellt. Der Körper 4 ist dabei mehrteilig in Form von mehreren über das zumindest eine Verbindungselement 15 beweglich miteinander verbundenen Teilen 18 gefertigt. Die Teile 18 befinden sich im gezeigten Ausführungsbeispiel in der Fertigungsstellung. Da es sich im gezeigten Ausführungsbeispiel um ein pulverbasiertes 3D-Druckverfahren handelt, weist die Fertigungsvorrichtung 3 eine Pulverauftragseinheit 19 zum Auftragen eines Materialpulvers und eine Bestrahlungseinheit 20 zum Verfestigen des Materialpulvers auf. Aufgrund einer übersichtlicheren Darstellung ist das um den Körper 4 umliegende, nicht verfestigte Pulver nicht dargestellt.

In der Figur 14 ist eine schematische Darstellung eines Körpers 4 in Fügestellung in einer Kammer 21 zum Glätten und/oder zum stoffschlüssigen Verbinden gezeigt. Der Körper 4 ist dabei mit einem Verfahren und/oder einer Vorrichtung 1 gemäß den vorangegangenen Ausführungsbeispielen der Figuren 1 bis 13 erstellt worden. Ebenso kann die Kammer 21 Teil der Vorrichtung 1 sein. Ebenso kann die Fertigungsvorrichtung 3 der Figuren 1 und 13 die Kammer 21 ausbilden.

Die Teile 18 des Körpers 4 sind anschließend an das Fertigen, welches in Figur 13 gezeigt ist, von der Fertigungsstellung in die Fügestellung mittels des Verbindungselements 15 bewegt worden. Da es sich im gezeigten Ausführungsbeispiel bei dem Verbindungselement 15 um ein Drehgelenk handelt, sind die zwei Teile 18 des Körpers 4 in die Fügestellung verschwenkt worden. In dieser Fügestellung liegen die zwei korrespondierenden Fügeflächen 14. Zudem kann, wie hier dargestellt, das Arretierelement 17 derart einrasten, dass die zwei Teile 18 nicht zurück in die Fertigungsstellung bewegbar sind.

In der Fügestellung kann der Körper 4 einer Lösungsmittelatmosphäre, die in der Kammer 21 gebildet werden kann, ausgesetzt werden. Dadurch kann die Oberfläche des Körpers 4 geglättet und/oder die Teile 18 des Körpers 4 im Bereich ihrer aneinander anliegenden Fügeflächen 14 stoffschlüssig miteinander verbunden werden. Sind die zwei Teile 18 stoffschlüssig im Bereich der Fügeflächen 14 miteinander verbunden, so kann optional daran anschließend das Verbindungselement 15 und/oder das Arretierelement 17 entfernt werden. Dadurch können abstehende Elemente vom Körper 4 entfernt werden. Zusätzlich oder alternativ kann das Verbindungselement 15 als Filmscharnier ausgebildet sein. Ein derartiges Verbindungselement 15 kann so gebildet sein, dass es nicht vom Körper 4 absteht.

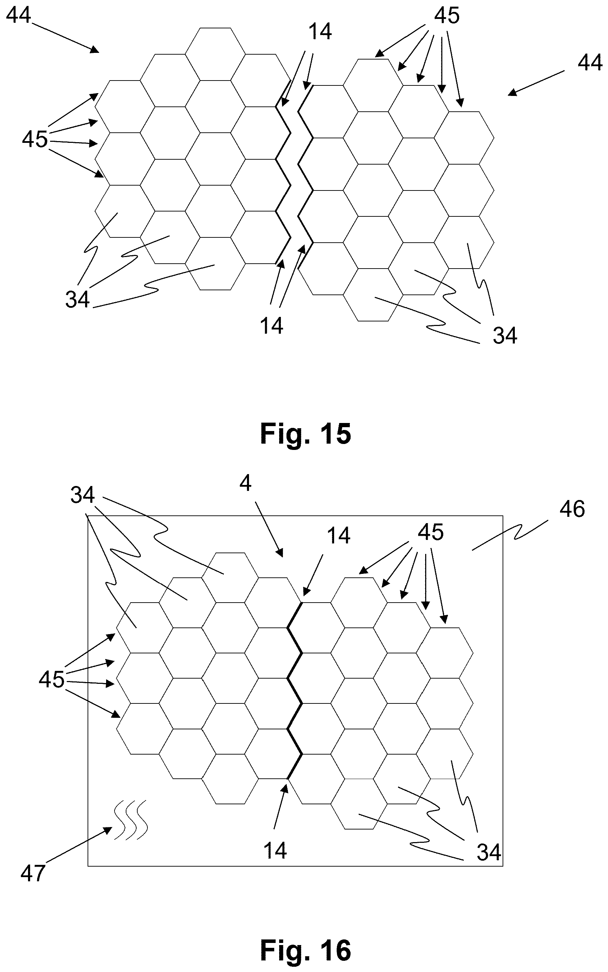

Figur 15 zeigt in einem zweidimensionalen Schema zwei Teilkörper 44, die zu dem Körper 4 zusammengefügt werden. Die Teilkörper 44 können jeweils aus einem virtuellen Teilmodell 13a, 13b gemäß der vorangegangenen Beschreibung hergestellt sein, wobei die genannten Merkmale einzeln oder in beliebiger Kombination vorhanden sein können. Zusätzlich oder alternativ können die Teilkörper 44 gemäß der vorangegangenen Beschreibung als Fertigungsmodell 12 ausgebildet sein, wobei die Teilkörper 44 in diesem Fall über zumindest das eine Verbindungselement 15 miteinander verbunden sind und/oder sich zueinander in einer verkleinerten Fertigungsstellung befinden.

Die zweidimensionale Darstellung dient der Veranschaulichung des Prinzips. In der Regel wird der Körper 4, gemäß der vorangegangenen Beschreibung eine dreidimensionale Form haben. Wie in der Figur 15 dargestellt, weisen die beiden Teilkörper 44 eine übereinstimmende Gitterstruktur 35 auf, die vorzugsweise gemäß der vorangegangenen Beschreibung zellkonform geteilt ist. Die Gitterstrukturen 35 weisen eine Vielzahl von Zellen 34 auf. Eine Kombination aus verschiedenen Gittermotiven als kleinste Einheit des Gitters ist ebenfalls denkbar.

Die Teilkörper 44 sind derart begrenzt, dass nur ganze und/oder geschlossene Zellen 34 in der Gitterstruktur 35 vorhanden sind. Anders ausgedrückt sind die Teilkörper 44 von Begrenzungsflächen 45 der Zellen 34 begrenzt. Ebenso wird eine jeweilige Fügefläche 14 der Teilkörper 44, an der sich die Teilkörper 44 während des Verfahrens berühren (siehe auch Figur 16), von einer Vielzahl von Begrenzungsflächen 45 der Zellen 34 gebildet.

Figur 16 zeigt in einem zweidimensionalen Schema das Verfahren zur Herstellung des zusammengesetzten Körpers 4. Die wenigstens zwei in einem additiven Fertigungsverfahren, insbesondere gemäß der vorangegangenen Beschreibung, hergestellten Teilkörper 44 werden derart in einer Kammer 46 platziert, dass sie sich an ihren korrespondierenden Fügeflächen 14 berühren. In der Kammer 46 liegt eine Lösungsmittelatmosphäre 47 vor. Durch die Lösungsmittelatmosphäre 47 wird einerseits eine Oberfläche der Teilkörper 44, insbesondere der Gitterstruktur 35 geglättet. Andererseits entsteht an den aneinander anliegenden korrespondierenden Fügeflächen 14 eine stoffschlüssige Verbindung zwischen den Teilkörpern 44, wodurch der zusammengesetzte Körper 4 erzeugt wird. Durch die aufeinander abgestimmte Form der Teilkörper 44 durch die Begrenzungsflächen 45 der Zellen 34 können die Teilkörper 44 formschlüssig verbunden werden.

Der zusammengesetzte Körper 4 hat insbesondere eine durchgängige und homogene Gitterstruktur 35. Idealerweise sind die korrespondierenden Fügeflächen 14 nach Abschluss des Verfahrens nicht mehr erkennbar. Die Lösungsmittelatmosphäre 47 kann auf die bereits beschriebenen Arten hergestellt werden. Zur Sicherheit ist die Kammer 46, beispielsweise während der Präsenz der Lösungsmittelatmosphäre 47, hermetisch abgeschlossen. Die Teilkörper 44 können beispielsweise in der Kammer 46 auf nicht dargestellten Stützen platziert werden oder an nicht dargestellten Haken aufgehängt werden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Vorrichtung
- 2: Recheneinheit
- 3: Fertigungsvorrichtung
- 4: Körper
- 5: Gesamtmodell
- 6: Fertigungsbereich
- 7: Eingangsschnittstelle
- 8: Geometriedaten
- 9: Ausgangsschnittstelle
- 10: Fertigungsdaten
- 11: Speichermedium
- 12: Fertigungsmodell
- 13: Teilmodell
- 14: Fügefläche
- 15, 15': Verbindungselement
- 16: Subteilmodell
- 17: Arretierelement
- 18: Teile
- 19: Pulverauftragseinheit
- 20: Bestrahlungseinheit
- 21: Kammer
- 22: Grundkörper
- 23: Schnittfläche
- 24: Einheitszelle
- 25: Kanten
- 26: Zelloberfläche
- 27: Mittelpunkt
- 28: Trennfläche
- 29: erste Seite der Schnittfläche
- 30: zweite Seite der Schnittfläche
- 31: erste Einheitszellengruppe
- 32: zweite Einheitszellengruppe
- 33: Stoßfläche
- 34: Zellen
- 35: Gitterstruktur
- 36: Strebe
- 37: Oberflächengitterstruktur
- 38: Außenfläche des Grundkörpers
- 39: Gemeinschaftsstreben
- 40: erster Teil der geteilten Gemeinschaftsstrebe
- 41: zweiter Teil der geteilten Gemeinschaftsstrebe
- 42: erster Knotenpunkt
- 43: zweiter Knotenpunkt
- 44: Teilkörper
- 45: Begrenzungsfläche
- 46: Kammer
- 47: Lösungsmittelatmosphäre

- AM: Außenmaß
- IM: Innenmaß
- LR: Längsrichtung
- QR: Querrichtung
- HR: Hochrichtung

## Patentansprüche

1. Computerimplementiertes Verfahren zum Teilen eines virtuellen dreidimensionalen Gesamtmodells (5), das ein virtuelles Abbild eines herzustellenden Körpers (4) darstellt, in zumindest zwei virtuelle Teilmodelle (13a, 13b), so dass der Körper (4) in einem begrenzten Fertigungsbereich einer additiven Fertigungsvorrichtung (3) gefertigt werden kann, das folgende Schritte umfasst:
- Bereitstellen eines dreidimensionalen virtuellen Grundkörpers (22) und Füllen des Grundkörpers (22) mit einer Vielzahl von Einheitszellen (24), wobei jede dieser Einheitszellen (24) mehrere Kanten (25) und eine Zelloberfläche (26) umfasst, die die äußere Form der jeweiligen Einheitszelle (24) definieren;
- Erstellen einer virtuellen Trennfläche (28) für das Gesamtmodell (5) des Körpers (4), die eine dreidimensionale zellkonforme, d.h. einer Geometrie, Form, Außenfläche und/oder Kontur der Einheitszellen (24) folgende, Form aufweist;
- Erstellen des Gesamtmodells (5) des Körpers (4) mit einer aus einer Vielzahl von Zellen (34) ausgebildeten Gitterstruktur (35), wobei die Einheitszellen (24) mit Streben (36) ersetzt werden, die sich entlang der Kanten (25) der Einheitszellen (24) erstrecken und für sich Körper mit einem Volumen darstellen; und
- Teilen des Gesamtmodells (5) entlang der zellkonformen Trennfläche (28) in zwei Teilmodelle (13a, 13b),
wobei Gemeinschaftsstreben (39) der Gitterstruktur (35), die jeweils sowohl Bestandteil zumindest einer Zelle (34) des einen Teilmodells (13a) als auch Bestandteil zumindest einer benachbarten Zelle (34) des anderen Teilmodells (13b) sind, mittels der zellkonformen Trennfläche (28) derart geteilt werden, dass die korrespondierenden Zellen (34a, 34b) geschlossen bleiben.

2. Computerimplementiertes Verfahren nach dem vorherigen Anspruch, **dadurch gekennzeichnet, dass** die Gemeinschaftsstreben (39) in ihrer jeweiligen Längsrichtung geteilt werden,
wobei die Gemeinschaftsstreben (39) vorzugsweise derart geteilt werden, dass sich die Teile (40, 41) der jeweiligen Gemeinschaftsstrebe (39) jeweils lückenlos und/oder durchgängig zwischen zwei Knotenpunkten (42, 43) der jeweils korrespondierenden Zelle (34) erstrecken; und/oder
wobei zumindest eine der Gemeinschaftsstreben (39) vorzugsweise derart geteilt wird, dass die jeweiligen Teile (40, 41) zueinander symmetrisch oder asymmetrisch sind.

3. Computerimplementiertes Verfahren nach einem oder mehreren der vorherigen Ansprüche, **dadurch gekennzeichnet, dass** das Verfahren folgenden Schritt umfasst:
- Festlegen zumindest einer den Grundkörper (22) teilenden, insbesondere ebenen, gekrümmten und/oder geknickten, Schnittfläche (23).

4. Computerimplementiertes Verfahren nach einem oder mehreren der vorherigen Ansprüche, **dadurch gekennzeichnet, dass** die dreidimensionale zellkonforme Form der Trennfläche (28) von einem Algorithmus und/oder mittels der Zelloberfläche (26) zumindest einiger der im Bereich der Schnittfläche (23) befindlichen ganzen Einheitszellen (24) erstellt wird.

5. Computerimplementiertes Verfahren nach einem oder mehreren der vorherigen Ansprüche, **dadurch gekennzeichnet, dass** zum Erstellen der dreidimensionalen zellkonformen Form der Trennfläche (28) zumindest die im Bereich der Schnittfläche (23) befindlichen ganzen Einheitszellen (24) zu jeweils einer der beiden Seiten (29, 30) der Schnittfläche (23) zugeordnet werden, so dass jeder der beiden Seiten (29, 30) der Schnittfläche (23) eine jeweilige Einheitszellengruppe (31, 32) zugeordnet ist, die im Bereich der Schnittfläche (23) eine dreidimensionale zellkonforme Stoßfläche (33) aufweisen.

6. Computerimplementiertes Verfahren nach Anspruch 5, **dadurch gekennzeichnet, dass** die ganzen Einheitszellen (24) jeweils über ihren Mittelpunkt (27) einer der beiden Seiten (29, 30) der Schnittfläche (23) zugeordnet werden, wobei die ganzen Einheitszellen (24) vorzugsweise jeweils derjenigen Seite (29, 30) der Schnittfläche (23) zugeordnet werden, auf der sich ihr Mittelpunkt (27) befindet.

7. Computerimplementiertes Verfahren nach einem oder mehreren der vorherigen Ansprüche 5 bis 6, **dadurch gekennzeichnet, dass** die Form der Trennfläche (28) korrespondierend und/oder anhand der dreidimensionalen zellkonformen Stoßfläche (33) einer der beiden Einheitszellengruppen (31, 32) erstellt wird.

8. Computerimplementiertes Verfahren nach einem oder mehreren der vorherigen Ansprüche, **dadurch gekennzeichnet, dass** die Einheitszellen (24), insbesondere zur Ausbildung einer Oberflächengitterstruktur (37), mit einer Außenfläche (38) des Grundkörpers (22) verschnitten werden.

9. Computerimplementiertes Verfahren nach einem oder mehreren der vorherigen Ansprüche, **dadurch gekennzeichnet, dass** das Verfahren zumindest einen der folgenden Schritte aufweist:
- Abgleichen wenigstens eines Außenmaßes (AM) des virtuellen dreidimensionalen Gesamtmodells (5) des Körpers (4) mit wenigstens einem korrespondierenden Innenmaß (IM) eines begrenzten Fertigungsbereichs (6) einer additiven Fertigungsvorrichtung (3) in zumindest einer Raumrichtung (LR, QR, HR);
- Teilen des Gesamtmodells (5) in die wenigstens zwei virtuellen dreidimensionalen Teilmodelle (13a, 13b), wenn das Außenmaß (AM) des Gesamtmodells (5) das korrespondierende Innenmaß (IM) des Fertigungsbereichs (6) überschreitet;
- Ausbilden zumindest eines Verbindungselements (15, 15'), das die wenigstens zwei Teilmodelle (13a, 13b) derart beweglich miteinander verbindet, dass diese relativ zueinander aus einer Fertigungsstellung, in welcher korrespondierende Fügeflächen (14) der Teilmodelle (13a, 13b) voneinander beabstandet sind, in eine Fügestellung, in welcher die korrespondierenden Fügeflächen (14) der Teilmodelle (13a, 13b) aneinander anliegen, bewegt werden können; und/oder
- Erstellung eines virtuellen dreidimensionalen Fertigungsmodells (12) in der Fertigungsstellung der Teilmodelle (13a, 13b).

10. Recheneinheit (2) zum Teilen eines virtuellen dreidimensionalen Gesamtmodells (5) eines Körpers (4) in zumindest zwei virtuelle Teilmodelle (13a, 13b),
**dadurch gekennzeichnet,**
**dass** die Recheneinheit (2) ausgebildet ist, ein computerimplementiertes Verfahren gemäß einem oder mehreren der vorherigen Ansprüche auszuführen.

11. Computerprogramm, das bei Ausführung durch eine Recheneinheit (2) diese veranlasst ein computerimplementiertes Verfahren zum Teilen eines virtuellen dreidimensionalen Gesamtmodells (5) eines Körpers (4) in zumindest zwei virtuelle Teilmodelle (13a, 13b) gemäß einem oder mehreren der vorherigen Ansprüche 1 bis 9 auszuführen.

12. Computerlesbares Speichermedium (11) mit einem darauf abgespeicherten virtuellen dreidimensionalen Gesamtmodell (5),
das mit einem computerimplementierten Verfahren gemäß Anspruch 1 hergestellt wurde,
das ein virtuelles Abbild eines herzustellenden Körpers (4) darstellt das eine aus einer Vielzahl von Zellen (34) ausgebildete Gitterstruktur (35) aufweist, wobei Streben (36) der Zellen (34) für sich Körper mit einem Volumen darstellen, und
das in zumindest zwei virtuelle Teilmodelle (13a, 13b) geteilt ist, so dass der Körper (4) in einem begrenzten Fertigungsbereich einer additiven Fertigungsvorrichtung (3) gefertigt werden kann,
wobei sich jeweils zueinander benachbarte erste Zellen (34a) des ersten Teilmodells (13a) und zweite Zellen (34b) des zweiten Teilmodells (13b) gemeinsame Strebe (36) teilen, die als Gemeinschaftsstreben (39) bezeichnet werden, wobei die Gemeinschaftsstreben (39) der Gitterstruktur (35) des Gesamtmodells (5), die Bestandteil zumindest einer Zelle (34) des einen Teilmodells (13a) als auch Bestandteil zumindest einer benachbarten Zelle (34) des anderen Teilmodells (13b) sind, derart geteilt sind, dass die korrespondierenden Zellen (34a, 34b) geschlossen bleiben.

13. Herstellungsverfahren zur Herstellung eines Körpers (4), das folgende Schritte umfasst:
- Erstellen eines virtuellen dreidimensionalen Gesamtmodells (5) des Körpers (4) mit einem computerimplementierten Verfahren gemäß einem oder mehreren der vorangegangenen Ansprüche 1 bis 9, das in zumindest zwei virtuelle Teilmodelle (13a, 13b) geteilt ist;
- Erstellen von Fertigungsdaten (10) für eine additive Fertigungsvorrichtung (3) anhand des geteilten, virtuellen, dreidimensionalen Gesamtmodells (5); und
- Fertigen des Körpers (4) mit der additiven Fertigungsvorrichtung (3) anhand der Fertigungsdaten (10).

14. Körper (4),
der mit einem Herstellungsverfahren gemäß Anspruch 13 hergestellt wurde,
der ein reales Abbild eines virtuellen dreidimensionalen Gesamtmodells (5) darstellt,
das mit einem computerimplementierten Verfahren gemäß Anspruch 1 hergestellt wurde,
das eine aus einer Vielzahl von Zellen (34) ausgebildete Gitterstruktur (35) aufweist, wobei Streben (36) der Zellen (34) für sich Körper mit einem Volumen darstellen, und
das in zumindest zwei virtuelle Teilmodelle (13a, 13b) geteilt ist, so dass der Körper (4) in einem begrenzten Fertigungsbereich einer additiven Fertigungsvorrichtung (3) gefertigt werden kann,
wobei sich jeweils zueinander benachbarte erste Zellen (34a) des ersten Teilmodells (13a) und zweite Zellen (34b) des zweiten Teilmodells (13b) gemeinsame Streben (36) teilen, die als Gemeinschaftsstreben (39) bezeichnet werden,
wobei Gemeinschaftsstreben (39) der Gitterstruktur (35) des Gesamtmodells (5), die Bestandteil zumindest einer Zelle (34) des einen Teilmodells (13a) als auch Bestandteil zumindest einer benachbarten Zelle (34) des anderen Teilmodells (13b) sind, derart geteilt sind, dass die korrespondierenden Zellen (34a, 34b) geschlossen bleiben.

15. Vorrichtung (1)
mit einer Recheneinheit (2) zum Erstellen eines virtuellen dreidimensionalen Gesamtmodells (5) eines Körpers (4) und/oder mit einer additiven Fertigungsvorrichtung (3) zum Herstellen des Körpers (4),
**dadurch gekennzeichnet,**
**dass** die Recheneinheit (2) gemäß Anspruch 10 ausgebildet ist.

## Claims

1. Computer-implemented method for dividing a virtual three-dimensional overall model (5) of a body (4), representing a virtual image of a body to be manufactured, into at least two virtual partial models (13a, 13b), so that the body (4) can be manufactured in a limited production area (6) of an additive manufacturing device (3), comprising the following steps:
- Providing a three-dimensional virtual base body (22) and filling the base body (22) with a plurality of unit cells (24), wherein each of said unit cells (24) comprises multiple edges (25) and a cell surface (26) defining the outer shape of the respective unit cell (24);
- Creating a virtual separating surface (28) for the overall model (5) of the body (4), which has a three-dimensional cell-conforming shape, i.e., a shape that follows the geometry, shape, outer surface and/or contour of the unit cells (24);
- Creating the overall model (5) of the body (4) with a lattice structure (35) formed from a plurality of cells (34), wherein the unit cells (24) are replaced by struts (36) extending along the edges (25) of the unit cells (24) and representing bodies with a volume; and
- Dividing the overall model (5) along the cell-conforming separating surface (28) into two partial models (13a, 13b),
wherein common struts (39) of the lattice structure (35), which are each part of at least one cell (34) of one partial model (13a) and part of at least one adjacent cell (34) of the other partial model (13b) are divided by means of the cell-conforming separating surface (28) in such a way that the corresponding cells (34a, 34b) remain closed.

2. Computer-implemented method according to the preceding claim, **characterized in that** the common struts (39) are divided in their respective longitudinal direction
wherein the common struts (39) are divided in such a way that the parts (40, 41) of the respective common strut (39) each extend without gaps and/or continuously between two nodes (42, 43) of the respective corresponding cell (34);
and/or
wherein at least one of the common struts (39) is divided in such a way that the respective parts (40, 41) are symmetrical or asymmetrical to one another.

3. Computer-implemented method according to one or more of the preceding claims, **characterized in that** the method comprises the following steps:
- Defining at least one cut surface (23) dividing the base body (22), in particular a flat, curved and/or kinked cut surface.

4. Computer-implemented method according to one or more of the preceding claims, **characterized in that** the three-dimensional cell-conforming shape of the separating surface (28) is determined by an algorithm and/or by means of a cell surface (26) of at least some of the whole unit cells (24) located in the region of the cut surface (23).

5. Computer-implemented method according to one or more of the preceding claims, **characterized in that**, in order to create the three-dimensional cell-conforming shape of the separating surface (28), at least the whole unit cells (24) located in the region of the cut surface (23) are assigned on each of the two sides (29, 30) to the cut surface (23) so that each of the two sides (29, 30) of the cut surface (23) is assigned to a respective unit cell group (31, 32) which has a three-dimensional cell-conforming abutment surface (33) in the region of the cut surface (23).

6. Computer-implemented method according to claim 5, **characterized in that** the whole unit cells (24) are assigned to one of the two sides (29, 30) of the cut surface (23) via their center point (27), wherein the whole unit cells (24) are preferably assigned to the side (29, 30) of the cut surface (23) on which its center point (27) is located.

7. Computer-implemented method according to one or more of the preceding claims 5 to 6, **characterized in that** the shape of the separating surface (28) is created correspondingly and/or on the basis of the three-dimensional cell-conforming abutment surface (33) of one of the two unit cell groups (31, 32).

8. Computer-implemented method according to one or more of the preceding claims, **characterized in that** the unit cells (24) are intersected with an outer surface (38) of the base body (22), in particular to form a surface lattice structure (37).

9. Computer-implemented method according to one or more of the preceding claims, **characterized in that** the method has at least one of the following steps:
- Matching at least one external dimension (AM) of the virtual three-dimensional overall model (5) of the body (4) with at least one corresponding internal dimension (IM) of a limited production area (6) of an additive manufacturing device (3) in at least one spatial direction (LR, QR, HR);
- Dividing the overall model (5) into the at least two virtual three-dimensional partial models (13a, 13b) when the external dimension (AM) of the overall model (5) exceeds the corresponding internal dimension (IM) of the production area (6);
- Forming at least one connecting element (15, 15'), which connects the at least two partial models (13a, 13b) to one another in such a movable manner that they move relative to one another from a production position in which corresponding joining surfaces (14) of the partial models (13a, 13b) are spaced apart to a joining position in which the corresponding joining surfaces (14) of the partial models (13a, 13b) abut one another; and/or
- Creating a virtual three-dimensional production model (12) in the production position of the partial models (13a, 13b).

10. Computing unit (2) for dividing a virtual three-dimensional overall model (5) of a body (4) into at least two virtual partial models (13a, 13b),
**characterized in that**
the computing unit (2) is designed to carry out the method according to one or more of the preceding claims.

11. Computer program which, when executed by a computing unit (2), causes said computing unit to carry out computer-implemented method for dividing a virtual three-dimensional overall model (5) of a body (4) into at least two virtual partial models (13a, 13b) according to one or more of the preceding claims 1 to 9.

12. Computer-readable storage medium (11) with a virtual three-dimensional overall model (5) of a body (4) representing a virtual image of a body to be manufactured stored thereon, which was manufactured with a computer-implemented method according to claim 1,
that has a lattice structure (35) formed from a plurality of cells (34), wherein struts (36) of the cells (34) represent bodies with a volume, and
that is divided into at least two virtual partial models (13a, 13b), so that the body (4) can be manufactured in a limited production area (6) of an additive manufacturing device (3),
wherein adjacent to one another first cells (34a) of the first partial model (13a) and second cells (34b) of the second partial model (13b) share common struts (36), which are referred to as common struts (39),
wherein the common struts (39) of the lattice structure (35) of the overall model (5), which are each part of at least one cell (34) of one partial model (13a) and part of at least one adjacent cell (34) of the other partial model (13b) are divided in such a way that the corresponding cells (34a, 34b) remain closed.

13. Production method for producing a body (4), comprising the following steps:
- Creating a virtual three-dimensional overall model (5) of the body (4), with a computer-implemented method according to one or more of the preceding claims 1 to 9, which is divided into at least two virtual partial models (13a, 13b),
- Creating production data (10) for an additive production device (3) based on the divided, virtual, three-dimensional overall model (5); and
- Producing the body (4) with the additive production device (3) based on the production data (10).

14. Body (4), produced by a production method according to claim 13, which represents a real image of a virtual three-dimensional overall model (5) produced by a computer-implemented method according to claim 1,
having a lattice structure (35) formed from a plurality of cells (34), wherein the struts (36) of the cells (24) and representing bodies with a volume and
that is divided into at least two virtual partial models (13a, 13b), so that the body (4) can be manufactured in a limited production area (6) of an additive manufacturing device (3),
wherein adjacent to one another first cells (34a) of the first partial model (13a) and second cells (34b) of the second partial model (13b) share common struts (36), which are referred to as common struts (39),
wherein the common struts (39) of the lattice structure (35) of the overall model (5), which are each part of at least one cell (34) of one partial model (13a) and part of at least one adjacent cell (34) of the other partial model (13b) are divided in such a way that the corresponding cells (34a, 34b) remain closed.

15. Device (1)
with a computing unit (2) for creating a virtual three-dimensional overall model (5) of a body (4), and/or
with an additive production device (3) for producing the body (4), **characterized in that**
the computing unit (2) is designed according to claim 10.

## Revendications

1. Procédé mis en œuvre par ordinateur pour diviser un modèle complet tridimensionnel virtuel (5), qui représente une image virtuelle d'un corps (4) à fabriquer, en au moins deux modèles partiels virtuels (13a, 13b), de sorte que le corps (4) peut être fabriqué dans une zone de fabrication limitée d'un dispositif de fabrication additive (3), comprenant les étapes consistant à:
- fournir un corps de base virtuel tridimensionnel (22) et remplir le corps de base (22) avec une pluralité de cellules unitaires (24), chacune de ces cellules unitaires (24) comprenant une pluralité de bords (25) et une surface de cellule (26) qui définissent la forme extérieure de la cellule unitaire respective (24);
- créer une surface de séparation virtuelle (28) pour le modèle complet (5) du corps (4), qui a une forme tridimensionnelle conforme aux cellules, c'est-à-dire suivant une géométrie, une forme, une surface extérieure et/ou un contour des cellules unitaires (24);
- créer le modèle complet (5) du corps (4) avec une structure réticulaire (35) formée d'une pluralité de cellules (34), dans lequel les cellules unitaires (24) sont remplacées par des entretoises (36) qui s'étendent le long des bords (25) des cellules unitaires (24) et représentent en soi des corps ayant un volume; et
- diviser le modèle complet (5) le long de la surface de séparation conforme aux cellules (28) en deux modèles partiels (13a, 13b),
dans lequel des entretoises communes (39) de la structure réticulaire (35), qui sont à chaque fois à la fois un composant d'au moins une cellule (34) d'un modèle partiel (13a) et un composant d'au moins une cellule voisine (34) de l'autre modèle partiel (13b), sont divisées au moyen de la surface de séparation conforme aux cellules (28) de telle sorte que les cellules correspondantes (34a, 34b) restent fermées.

2. Procédé mis en œuvre par ordinateur selon la revendication précédente, **caractérisé en ce que** les entretoises communes (39) sont divisées dans leur direction longitudinale respective,
dans lequel les entretoises communes (39) sont de préférence divisées de telle sorte que les parties (40, 41) de l'entretoise commune respective (39) s'étendent à chaque fois sans espace et/ou en continu entre deux points nodaux (42, 43) de la cellule correspondante respective (34); et/ou
dans lequel au moins l'une des entretoises communes (39) est de préférence divisée de telle sorte que les parties respectives (40, 41) sont symétriques ou asymétriques l'une par rapport à l'autre.

3. Procédé mis en œuvre par ordinateur selon l'une quelconque ou plusieurs des revendications précédentes, **caractérisé en ce que** le procédé comprend l'étape consistant à:
- définir au moins une surface d'intersection (23), en particulier plane, incurvée et/ou pliée, divisant le corps de base (22).

4. Procédé mis en œuvre par ordinateur selon l'une quelconque ou plusieurs des revendications précédentes, **caractérisé en ce que** la forme tridimensionnelle conforme aux cellules de la surface de séparation (28) est créée par un algorithme et/ou au moyen de la surface de cellule (26) d'au moins certaines des cellules unitaires entières (24) se trouvant dans la région de la surface d'intersection (23).

5. Procédé mis en œuvre par ordinateur selon l'une quelconque ou plusieurs des revendications précédentes, **caractérisé en ce que** pour créer la forme tridimensionnelle conforme aux cellules de la surface de séparation (28), au moins les cellules unitaires entières (24) se trouvant dans la région de la surface d'intersection (23) sont à chaque fois associées à l'un des deux côtés (29, 30) de la surface d'intersection (23), de sorte qu'à chacun des deux côtés (29, 30) de la surface d'intersection (23) est associé un groupe de cellules unitaires respectif (31, 32) qui, dans la région de la surface d'intersection (23), ont une surface d'impact tridimensionnelle conforme aux cellules (33).

6. Procédé mis en œuvre par ordinateur selon la revendication 5, **caractérisé en ce que** les cellules unitaires entières (24) sont à chaque fois associées par leur point central (27) à l'un des deux côtés (29, 30) de la surface d'intersection (23), dans lequel les cellules unitaires entières (24) sont de préférence à chaque fois associées au côté (29, 30) de la surface d'intersection (23) sur lequel se trouve leur point central (27).

7. Procédé mis en œuvre par ordinateur selon l'une quelconque ou plusieurs des revendications précédentes 5 à 6, **caractérisé en ce que** la forme de la surface de séparation (28) est créée de manière correspondante et/ou à l'aide de la surface d'impact tridimensionnelle conforme aux cellules (33) de l'un des deux groupes de cellules unitaires (31, 32).

8. Procédé mis en œuvre par ordinateur selon l'une quelconque ou plusieurs des revendications précédentes, **caractérisé en ce que** les cellules unitaires (24), en particulier pour la formation d'une structure réticulaire de surface (37), sont coupées avec une surface extérieure (38) du corps de base (22).

9. Procédé mis en œuvre par ordinateur selon l'une quelconque ou plusieurs des revendications précédentes, **caractérisé en ce que** le procédé présente au moins l'une des étapes consistant à:
- comparer au moins une dimension extérieure (AM) du modèle complet tridimensionnel virtuel (5) du corps (4) avec au moins une dimension intérieure correspondante (IM) d'une zone de fabrication limitée (6) d'un dispositif de fabrication additive (3) dans au moins une direction spatiale (LR, QR, HR);
- diviser le modèle complet (5) en les au moins deux modèles partiels tridimensionnels virtuels (13a, 13b) lorsque la dimension extérieure (AM) du modèle complet (5) dépasse la dimension intérieure correspondante (IM) de la zone de fabrication (6);
- former au moins un élément de liaison (15, 15'), qui relie les au moins deux modèles partiels (13a, 13b) de manière mobile l'un à l'autre de telle sorte que ceux-ci peuvent être déplacés l'un par rapport à l'autre d'une position de fabrication, dans laquelle des surfaces d'assemblage correspondantes (14) des modèles partiels (13a, 13b) sont espacées l'une de l'autre, dans une position d'assemblage, dans laquelle les surfaces d'assemblage correspondantes (14) des modèles partiels (13a, 13b) sont adjacentes l'une à l'autre; et/ou
- création d'un modèle de fabrication tridimensionnel virtuel (12) dans la position de fabrication des modèles partiels (13a, 13b).

10. Unité arithmétique (2) pour diviser un modèle complet tridimensionnel virtuel (5) d'un corps (4) en au moins deux modèles partiels virtuels (13a, 13b),
**caractérisée en ce que**
l'unité arithmétique (2) est conçue pour mettre en œuvre un procédé mis en œuvre par ordinateur selon l'une quelconque ou plusieurs des revendications précédentes.

11. Programme informatique qui, lorsqu'il est exécuté par une unité arithmétique (2), amène celle-ci à mettre en œuvre un procédé mis en œuvre par ordinateur pour diviser un modèle complet tridimensionnel virtuel (5) d'un corps (4) en au moins deux modèles partiels virtuels (13a, 13b) selon l'une quelconque ou plusieurs des revendications précédentes 1 à 9.

12. Moyen de stockage lisible par ordinateur (11) sur lequel est enregistré un modèle complet tridimensionnel virtuel (5) qui a été fabriqué par un procédé mis en œuvre par ordinateur selon la revendication 1,
qui représente une image virtuelle d'un corps (4) à fabriquer,
qui présente une structure réticulaire (35) formée d'une pluralité de cellules (34), dans lequel des entretoises (36) des cellules (34) représentent en soi des corps ayant un volume, et
qui est divisé en au moins deux modèles partiels virtuels (13a, 13b), de sorte que le corps (4) peut être fabriqué dans une zone de fabrication limitée d'un dispositif de fabrication additive (3),
dans lequel des premières cellules voisines l'une de l'autre (34a) du premier modèle partiel (13a) et des deuxièmes cellules (34b) du deuxième modèle partiel (13b) divisent des entretoises communes (36), qui sont appelées entretoises communes (39), dans lequel les entretoises communes (39) de la structure réticulaire (35) du modèle complet (5), qui sont à la fois un composant d'au moins une cellule (34) d'un modèle partiel (13a) et un composant d'au moins une cellule voisine (34) de l'autre modèle partiel (13b), sont divisées de telle sorte que les cellules correspondantes (34a, 34b) restent fermées.

13. Procédé de fabrication pour la fabrication d'un corps (4), comprenant les étapes consistant à:
- créer un modèle complet tridimensionnel virtuel (5) du corps (4) par un procédé mis en œuvre par ordinateur selon l'une quelconque ou plusieurs des revendications précédentes 1 à 9, qui est divisé en au moins deux modèles partiels virtuels (13a, 13b);
- créer des données de fabrication (10) pour un dispositif de fabrication additive (3) à l'aide du modèle complet tridimensionnel virtuel divisé (5); et
- fabriquer le corps (4) avec le dispositif de fabrication additive (3) à l'aide des données de fabrication (10).

14. Corps (4),
qui a été fabriqué par un procédé de fabrication selon la revendication 13,
qui représente une image réelle d'un modèle complet tridimensionnel virtuel (5),
qui a été fabriqué par un procédé mis en œuvre par ordinateur selon la revendication 1,
qui présente une structure réticulaire (35) formée d'une pluralité de cellules (34), dans lequel des entretoises (36) des cellules (34) représentent en soi des corps ayant un volume, et
qui est divisé en au moins deux modèles partiels virtuels (13a, 13b), de sorte que le corps (4) peut être fabriqué dans une zone de fabrication limitée d'un dispositif de fabrication additive (3),
dans lequel des premières cellules voisines l'une de l'autre (34a) du premier modèle partiel (13a) et des deuxièmes cellules (34b) du deuxième modèle partiel (13b) divisent des entretoises communes (36), qui sont appelées entretoises communes (39),
dans lequel des entretoises communes (39) de la structure réticulaire (35) du modèle complet (5), qui sont à la fois un composant d'au moins une cellule (34) d'un modèle partiel (13a) et un composant d'au moins une cellule voisine (34) de l'autre modèle partiel (13b), sont divisées de telle sorte que les cellules correspondantes (34a, 34b) restent fermées.

15. Dispositif (1)
comprenant une unité arithmétique (2) pour créer un modèle complet tridimensionnel virtuel (5) d'un corps (4) et/ou comprenant un dispositif de fabrication additive (3) pour fabriquer le corps (4),
**caractérisée en ce que**
l'unité arithmétique (2) est conçue selon la revendication 10.
